# EUROPÄISCHE PATENTSCHRIFT

(11) **EP 3 161 525 B1**
(45) Veröffentlichungstag und Bekanntmachung des Hinweises auf die Patenterteilung: **14.04.2021**
(21) Anmeldenummer: 15733414.5
(22) Anmeldetag: 25.06.2015
(51) Int. Cl.: G01V 3/15, G01C 15/02

(54) **VERFAHREN ZUM BETRIEB EINES BILDGEBENDEN ORTUNGSGERÄTS SOWIE BILDGEBENDES ORTUNGSGERÄT**
METHOD OF OPERATING AN IMAGING LOCATING DEVICE AND IMAGING LOCATING DEVICE
PROCÉDÉ D'OPÉRATION D'UN APPARAEIL D'IMAGERIE DE LOCALISATION ET APPARAEIL D'IMAGERIE DE LOCALISATION

(30) Priorität: 25.06.2014 DE 102014212131
(43) Veröffentlichungstag der Anmeldung: 03.05.2017
(73) Patentinhaber: Robert Bosch GmbH, 70442 Stuttgart (DE)
(72) Erfinder: ZIBOLD, Tobias, 70567 Stuttgart (DE)
(86) Internationale Anmeldenummer: PCT/EP2015/064418
(87) Internationale Veröffentlichungsnummer: WO 2015/197774

(56) Entgegenhaltungen:
- WO-A2-2009/148524
- AU-B1- 2003 234 849
- US-B1- 7 443 154

## Beschreibung

### Stand der Technik

In DE 10 2008 043 190 ist bereits ein Verfahren zur Ortung von Objekten in einem Untersuchungsgegenstand vorgeschlagen worden, bei dem wenigstens eine Bewegungskenngröße einer Bewegungssensoreinheit und zumindest eine Ortungskenngröße einer Ortungseinheit miteinander ausgewertet werden. Ferner betreffen AU 2003/234849 A1, US 7,443,154 B1 und WO 2009/148524 A2 Verfahren zum Betrieb eines bildgebenden Ortungsgeräts.

### Offenbarung der Erfindung

Die Erfindung geht aus von einem Verfahren zum Betrieb eines bildgebenden Ortungsgeräts, bei dem durch Ortung von unter einer Untersuchungsoberfläche verborgenen Ortungsobjekten eine zumindest zweidimensionale Karteninformation erzeugt wird.

Es wird vorgeschlagen, dass unter Verwendung einer Auswertevorrichtung des Ortungsgeräts aus mittels einer Ortungsvorrichtung des Ortungsgeräts ermittelter Ortungsdaten und aus mittels einem Positionssensor des Ortungsgeräts ermittelter Positionsdaten eine Handlungsanweisung zum Führen des Ortungsgeräts abgeleitet wird, um einen optimierten Zugewinn an die Ortung betreffenden Karteninformationen zu erhalten, wobei unter Verwendung der Auswertevorrichtung die Handlungsanweisung als zumindest eine Trajektorie berechnet, entlang derer das Ortungsgerät zu führen ist, um einen optimierten Zugewinn an die Ortung betreffenden Karteninformationen zu erhalten.

Unter einem bildgebenden Ortungsgerät ist insbesondere eine Vorrichtung zu verstehen, die einer Ortung von unter einer Untersuchungsoberfläche verborgenen Ortungsobjekten dient. Das Ortungsgerät ist vorteilhaft dazu vorgesehen, durch Umpositionieren, insbesondere in Folge eines Verfahrens oder Verschiebens in Bezug auf die Untersuchungsoberfläche, eine sukzessive Untersuchung und Vermessung der Untersuchungsoberfläche hinsichtlich unter der Untersuchungsoberfläche verborgener Ortungsobjekte durchführen. Bevorzugt dient das Ortungsgerät ferner der Ausgabe zumindest von Messergebnissen, insbesondere von Ortungsergebnissen, in Form einer intuitiv verständlichen Karte und stellt in diesem Sinne ein "bildgebendes" Ortungsgerät dar. "Bildgebend" charakterisiert somit insbesondere die Fähigkeit des Ortungsgeräts, in Folge eines Ortungsvorgangs eine bildhafte Darstellung der Ortungsergebnisse, insbesondere einer zumindest zweidimensionalen Karteninformation, bereitzustellen und bevorzugt an einen Benutzer des Ortungsgeräts auszugeben.

Unter Umpositionieren ist insbesondere ein in beliebiger Richtung durchgeführtes Verfahren, Bewegen, Verschieben, Rotieren, Drehen oder ein anderweitiges Ändern der Position und/oder der Ausrichtung des Ortungsgeräts in Bezug auf die Untersuchungsoberfläche zu verstehen.

Unter einer Untersuchungsoberfläche ist insbesondere eine Oberfläche eines hinsichtlich verborgener Ortungsobjekte zu untersuchenden Gegenstands oder Werkstücks zu verstehen. Beispielsweise und nicht abschließend kann es sich bei dem Werkstück um Baustoffe, eine Wand, einen Boden, eine Decke, Estrich, ein organisches Gebilde (insbesondere auch Teile eines Körpers) und/oder Teile eines Geländes handeln. Bestehen kann der Gegenstand oder das Werkstück beispielsweise insbesondere aus Holz, Glas, Kunststoff, Beton, Stein, Ziegel, Gips, Metall, organischen Materialien oder dergleichen. Des Weiteren lassen sich prinzipiell auch Flüssigkeiten untersuchen. Einschlüsse eines Materials, das sich von dem Material des zu untersuchenden Gegenstands unterscheidet oder dessen physikalischen Eigenschaften sich von denen des Materials des zu untersuchenden Gegenstands unterscheiden, stellen beispielhafte Ortungsobjekte dar. Typische Beispiele für derartige Ortungsobjekte sind Stromleitungen, Rohre, Gasleitungen, Hohlräume, Bewehrungen oder dergleichen, die in einer Gebäudewand verborgen liegen.

Das bildgebende Ortungsgerät weist zur Durchführung der Ortung zumindest eine Ortungsvorrichtung auf, die dazu vorgesehen ist, Ortungsdaten zu unter einer Untersuchungsoberfläche verborgenen Ortungsobjekten zu erfassen. Vorzugsweise ist bei der Ortung ein direkter, insbesondere taktiler Kontakt zwischen der Ortungsvorrichtung und einem zu ortenden Ortungsobjekt nicht nötig. Unter einer Ortungsvorrichtung soll insbesondere eine Vorrichtung verstanden werden, die Mittel aufweist, die dazu vorgesehen sind, physikalische und/oder chemische Größen, die auf ein Vorhandensein eines Ortungsobjekts schließen lassen, zu erfassen und in ein elektrisch auswertbares Signal umzuwandeln. Bevorzugt ist eine Ortungsvorrichtung dazu vorgesehen, mittels Auswertung einer elektrischen und/oder magnetischen Feldänderung oder einer Laufzeitänderung einer in ein zu untersuchendes Material ausgestrahlten Strahlung, in einem Werkstück verborgene Ortungsobjekte zu detektieren. Insbesondere schließt die Ortungsvorrichtung zum Betrieb der Mittel notwendige Komponenten, elektrische Schaltungen und dergleichen ein. Bevorzugt weisen die Mittel der Ortungsvorrichtung einen Ortungssensor aus einer Gruppe von Sensoren auf, die zumindest induktive Sensoren, beispielsweise Wirbelstromsensoren, Pulsinduktionssensoren, Transmit-Receive-Sensoren oder Magnetfeldsensoren, sowie kapazitive Sensoren, AC-Sensoren, Radar-Sensoren, insbesondere Ultrabreitband-Radar- und Breitband-Impuls-Radar-Sensoren, Mikrowellen-Sensoren, Ultraschall-Sensoren, Temperatursensoren, Impact-Echo-Sensoren, Potentialfeldsensoren, Widerstands-Sensoren, Leitfähigkeits-Sensoren, Feuchtigkeits-Sensoren, NMR-Sensoren oder dergleichen umfasst.

Unter "vorgesehen" soll insbesondere speziell "programmiert", "ausgelegt" und/oder "ausgestattet" verstanden werden. Darunter, dass ein Objekt zu einer bestimmten Funktion "vorgesehen" ist, soll insbesondere verstanden werden, dass das Objekt diese bestimmte Funktion in zumindest einem Anwendungs- und/oder Betriebszustand erfüllt und/oder ausführt oder dazu ausgelegt ist, die Funktion zu erfüllen.

Insbesondere erfasst die Ortungsvorrichtung, insbesondere ein Ortungssensor der Ortungsvorrichtung, an einer jeweiligen Messposition des Ortungsgeräts bezogen auf die Untersuchungsoberfläche einen oder mehrere Sensor-Rohwerte Sₖ,ₙ, wobei der Index k verschiedene Sensorwerte des Ortungssensors kennzeichnen kann und der Index n die Zugehörigkeit des Sensor-Rohwerts zu der entsprechenden Messposition (Xₙ,Yₙ) kennzeichnet, an der der Sensor-Rohwert gemessen wurde. Die Ortungsvorrichtung, insbesondere die zum Betrieb des Ortungssensors vorgesehenen Mittel der Ortungsvorrichtung, berechnen aus den Rohwerten S_{k,n} des Ortungssensors Sensorwerte S_{m,n}. Im einfachsten Fall erfolgt die Berechnung durch identische Abbildung, in komplexeren Fällen durch lineare Abbildungen wie Summenbildung, Differenzbildung, Gewichtung, oder auch nichtlineare Abbildung wie beispielsweise durch Zuweisung von Klassen. Diese Sensorwerte S_{m,n} stellen die im Rahmen dieses Patents genannten Ortungsdaten der Ortungsvorrichtung dar.

Zur Bestimmung der jeweiligen Messposition weist das bildgebende Ortungsgerät bevorzugt einen Positionssensor auf. Unter einem Positionssensor ist insbesondere eine Vorrichtung zu verstehen, die dazu vorgesehen ist, eine gegenwärtige Position des Positionssensors - bevorzugt auch eine Ausrichtung des Positionssensors - und somit des Ortungsgeräts bezogen auf die Untersuchungsoberfläche zu bestimmen und in Form von Positionsdaten dem Ortungsgerät zur weiteren Verarbeitung auszugeben. Die gegenwärtige Position und/oder Ausrichtung kann dabei relativ oder absolut zu einer früheren Position und/oder Ausrichtung, insbesondere bezogen auf zumindest einen ortsfesten Bezugspunkt, insbesondere bezogen auf einen vom Ortungsgerät unabhängigen ortsfesten Bezugspunkt, erfasst werden. In einer bevorzugten Ausführungsform kann der Positionssensor beispielsweise als ein optischer und/oder mechanischer Wegstreckensensor ausgebildet sein, der in einem Betriebszustand eine Bewegung und/oder Drehung des Ortungsgeräts auf der Untersuchungsoberfläche erfasst. Alternativ oder zusätzlich kann der Positionssensor auch auf anderen, einem Fachmann zweckmäßig erscheinenden Messverfahren beruhen, beispielsweise unter Verwendung von Inertialsensorik oder in Ausgestaltung eines Ultraschallsensors, eines barometrischen Sensors oder eines GPS-Sensors. Insbesondere kann der Positionssensor einen oder mehrere Sensoren aus einer Gruppe von Sensoren aufweisen, die zumindest neigungs-, winkel-, abstands-, translations-, beschleunigungs- sowie drehratensensitive Sensoren umfasst. Die von dem Positionssensor ermittelten und ausgegebenen Positionsdaten betreffen zumindest Koordinaten in zwei Richtungen, die die Position des Positionssensors und damit des Ortungsgeräts auf der Untersuchungsoberfläche bestimmen, beispielsweise repräsentiert als ein auf die Untersuchungsoberfläche bezogenes, zumindest zweidimensionales, Koordinatenpaar (Xₙ,Yₙ). Ferner ist auch denkbar, dass es sich bei den Positionsdaten um mehrdimensionale Koordinaten handelt, die beispielsweise auch die Ausrichtung des Ortungsgeräts bezogen auf die Untersuchungsoberfläche berücksichtigen. Die Positionsdaten können in Form eines Rasters mit äquidistanten Abständen gleichmäßig über die Untersuchungsoberfläche angeordnet sein, oder bevorzugt - einem beliebigen Verfahrweg des Ortungsgeräts bezogen auf die Untersuchungsoberfläche folgend - ungleichmäßig über die Untersuchungsoberfläche verteilt sein.

Unter einer Auswertevorrichtung ist eine Vorrichtung zu verstehen, die einen Informationseingang, eine Informationsverarbeitungseinheit sowie eine Informationsausgabe aufweist. Der Informationseingang dient zur Annahme von mittels der Ortungsvorrichtung ermittelten Ortungsdaten sowie von mittels des Positionssensors ermittelten Positionsdaten. Die Informationsverarbeitungseinheit dient der Bearbeitung, insbesondere der Auswertung, von angenommenen Daten. Die Informationsausgabe dient der Weitergabe oder Ausgabe der bearbeiteten und/oder ausgewerteten Daten weitere Komponenten des Ortungsgeräts, insbesondere an eine Steuervorrichtung und/oder an eine Speichervorrichtung und/oder an eine Datenkommunikationsschnittstelle und/oder an eine Anzeigevorrichtung. Vorteilhaft weist die Auswertevorrichtung Komponenten auf, die zumindest einen Prozessor, einen Speicher und ein Betriebsprogramm mit Auswerte- und Berechnungsroutinen umfassen. Insbesondere können die elektronischen Bauteile der Auswertevorrichtung auf einer Platine angeordnet sein. Besonders bevorzugt sind die elektronischen Bauteile der Auswertevorrichtung in Form eines Mikrokontrollers realisiert. Des Weiteren können eine Steuervorrichtung und die Auswertevorrichtung besonders bevorzugt auch als ein einzelnes Bauteil ausgeführt sein. Alternativ oder zusätzlich kann die Auswertevorrichtung auch mit Komponenten der Anzeigevorrichtung als ein einzelnes Bauteil ausgeführt sein. Die Auswertevorrichtung ist zumindest dazu vorgesehen, durch Zuordnung von Ortungsdaten zumindest einer Ortungsvorrichtung zu Positionsdaten eine zumindest zweidimensionale Karteninformation zu bestimmen und/oder bereitzustellen, insbesondere einer weiteren Komponente des Ortungsgeräts zur weiteren Verarbeitung zur Verfügung zu stellen. Ferner kann die Auswertevorrichtung bevorzugt Auswerteroutinen zur Aufbereitung und/oder Analyse von Ortungsdaten und/oder Positionsdaten aufweisen, insbesondere Regelroutinen, Steuerroutinen, Analyseroutinen, Berechnungsroutinen, Zuordenroutinen, Umrechnungsroutinen, statistische Auswerteroutinen, Filter oder dergleichen. Insbesondere weist die Auswertevorrichtung zumindest mathematische Routinen auf, die im Rahmen einer mathematischen Optimierungsrechnung Anwendung finden können, bevorzugt beispielsweise numerische Algorithmen oder dergleichen.

Eine zumindest zweidimensionale Karteninformation stellt eine mehrdimensionale, insbesondere pseudo-mehrdimensionale, zumindest aber zweidimensionale ausgewertete und/oder aufbereitete Information über eine Ortung der unter einer Untersuchungsoberfläche verborgenen Ortungsobjekte dar. Dabei kennzeichnet die Bezeichnung "zumindest zweidimensional", dass eine Karteninformation eine Information über unter einer Untersuchungsoberfläche verborgene Ortungsobjekte zumindest in zwei Richtungen, vorzugsweise in zwei orthogonalen Richtungen, enthält. Vorzugsweise sind die zwei Richtungen der Untersuchungsoberfläche, beispielsweise anhand von gegebenen und/oder festlegbaren Bezugspunkten, zuordenbar. Bevorzugt erstecken sich die zwei Richtungen in einer Ebene der Untersuchungsoberfläche, insbesondere entlang der Untersuchungsoberfläche und/oder in einer zur Untersuchungsoberfläche parallel angeordneten Ebene. Bevorzugt umfasst eine zumindest zweidimensionale Karteninformation zumindest Informationen über unter einer Untersuchungsoberfläche verborgene Ortungsobjekte, die mit zweidimensionalen Positionsdaten des Ortungsgeräts bezogen auf die Untersuchungsoberfläche zum Ortungszeitpunkt der Ortung korreliert sind. Bevorzugt sollen unter einer zumindest zweidimensionalen Karteninformation im Rahmen dieses Patents insbesondere korrelierte Ortungs- und Positionsdaten verstanden werden, die vorgesehen sind, mittels einer Anzeigevorrichtung zumindest teilweise in Form einer Karte an einen Benutzer des Ortungsgeräts ausgegeben zu werden. Eine zumindest zweidimensionale Karteninformation kann insbesondere auf eine Messung unmittelbar bezogene Informationen oder Messwerte der Ortungsvorrichtung betreffen, beispielsweise Amplituden, Phasenlagen, Relaxationszeiten oder dergleichen. Alternativ kann eine zumindest zweidimensionale Karteninformation auch interpretierte und/oder aufbereitete Informationen wie Richtungsinformationen, qualitative Signalstärken eines Ortungssignals, Tiefeninformationen, Ja-/Nein-Aussagen zu einer Existenz eines Ortungsobjekts oder dergleichen betreffen. In einer bevorzugten Ausführungsform kann die zumindest zweidimensionale Karteninformation in Form einer insbesondere mehrdimensionalen Matrix, Tabelle, Array, Liste oder dergleichen verarbeitet und/oder gespeichert und/oder ausgegeben werden. Insbesondere wird die zumindest zweidimensionale Karteninformation, bevorzugt in Form einer Matrix, Tabelle, Array, Liste oder dergleichen, in Folge eines Umpositionierens des Ortungsgeräts bezogen auf die Untersuchungsoberfläche sukzessiv erweitert und/oder aktualisiert und/oder verfeinert und/oder überschrieben.

Bevorzugt stellt die zumindest zweidimensionale Karteninformation eine inter- und/oder extrapolierte zweidimensionale Karteninformation dar, bei der zumindest für einen Teil der Bereiche der zweidimensionalen Karteninformation, für die bislang keine Ortungsdaten verfügbar sind, mittels Inter- oder Extrapolationsroutinen der Auswertevorrichtung Ortungsinformationen ermittelt werden. Dazu werden vorzugsweise Ortungsdaten von Bereichen der zumindest zweidimensionale Karteninformation in einer Umgebung des Bereichs ohne Ortungsdaten zur Berechnung inter- oder extrapolierter Ortungsinformationen des Bereichs ohne Ortungsdaten genutzt. Insbesondere ist die Auswertevorrichtung dazu vorgesehen, Ortungsdaten aus einer räumlichen Umgebung eines Bereichs zur Ermittlung eines Interpolationswertes zu interpolieren, und gewichtet dazu die Ortungsdaten aus einer Umgebung dieses Bereichs. Insbesondere sind unter den Bereichen der Karteninformation auch einzelne Felder oder Rasterpunkte der in einer Matrix-Struktur angeordneten bzw. in ein Raster untergliederten zumindest zweidimensionalen Karteninformation zu verstehen.

Bevorzugt wird aus den bereits ermittelten Ortungsdaten S_{m,n} (d.h. verarbeiteten Sensorwerten) durch das Ortungsgerät, insbesondere dessen Auswertevorrichtung, die zumindest zweidimensionale Karteninformation K_{µv,xy} auf einem bevorzugt äquidistanten Raster von Positionskoordinaten (Rasterpunkte) berechnet. Dazu werden Ortungsdaten S_{m,n} bevorzugt für solche Rasterpunkte (synonym: Positionskoordinaten), für die bislang keine Ortungsinformation in Folge eines Ortungsvorgangs vorliegt, und die innerhalb einer konvexen Hülle der bereits untersuchten Messpositionen liegen - repräsentiert durch die Menge der Positionsdaten Rₙ = (Xₙ,Yₙ) - aus bereits gemessenen Ortungsdaten an Messpositionen Rₙ interpoliert. Alternativ oder zusätzlich kann ferner auch eine Extrapolation von Ortungsdaten für solche Rasterpunkte (Positionskoordinaten), für die bislang keine Ortungsinformation in Folge eines Ortungsvorgangs vorliegt, und die außerhalb der konvexen Hülle der bereits untersuchten Messpositionen Rₙ liegen, aus bereits gemessenen Ortungsdaten an Messpositionen Rₙ erfolgen. Unter "Interpolation" sollen hier alle verwendbaren, insbesondere sinnvollen Arten von bekannten Interpolationsalgorithmen verstanden werden, mittels der sich Ortungsdaten aus einer Umgebung eines Bereichs zur Ermittlung eines Interpolationswertes für diesen Bereich interpolieren lassen. Vorteilhaft können sowohl Ortungsdaten aus einer näher oder einer weiter gefassten Umgebung von Rasterpunkten, für die jeweils eine Interpolation durchgeführt werden soll, zur Abschätzung von interpolierten Ortungsdaten für die zumindest zweidimensionale Karteninformation K_{µv,xy} verwendet werden. Beispiele derartiger Interpolationsalgorithmen stellen lineare und/oder höhere, insbesondere nichtlineare Interpolationsalgorithmen dar, insbesondere Interpolationsalgorithmen basierend auf einer Delaunay-Triangulation, basierend auf Kriging- oder Inverse-Distance-Weighting, sowie Interpolationsalgorithmen basierend auf einer Voronoi-Interpolation (Nächste-Nachbar-Interpolation). Ferner können prinzipiell auch Radar- und/oder Ultraschall-Bildgebungsmethoden wie eine "Synthetic-Aperture-Focusing-Technique" (SAR, SAFT) Anwendung finden.

Bevorzugt kann darüber hinaus eine zumindest zweidimensionale Karteninformation K_{µv,xy} vorgesehen sein, die die Information beinhalten, ob an den Rasterpunkten (Positionskoordinaten des Rasters), bevorzugt an beliebigen Messpositionen, Ortungsdaten und/oder eine Mehrzahl von Ortungsdaten vorliegt. Auf diese Weise stellt diese Ausführung einer zumindest zweidimensionalen Karteninformation eine Information dar, aus der hervorgeht, ob für einen Bereich von möglichen Messpositionen (Positionsdaten) bereits Ortungsdaten vorhanden sind, bzw. ob für einen Bereich von möglichen Messpositionen bereits eine signifikante Menge an Ortungsdaten vorhanden ist. Vorteilhaft wird somit in erfindungsgemäßem Verfahren aus vorliegenden Ortungsdaten und Positionsdaten, insbesondere auch aus Systemparametern, eine Handlungsanweisung zum Führen des Ortungsgeräts abgeleitet. Die Handlungsanweisung zum Führen des Ortungsgeräts stellt dabei eine zur Ausgabe an einen Benutzer des Ortungsgeräts vorgesehene Information dar, die dem Benutzer konkrete Anweisungen gibt, wie, insbesondere in welche Richtung, das Ortungsgerät geführt, d.h. umpositioniert werden muss, um einen optimierten Zugewinn an die Ortung betreffenden Karteninformationen zu erhalten. Derart kann die Handlungsanweisung als eine kontextsensitive und/oder situationsabhängige Benutzerführung für das Ortungsgerät verstanden werden, die dem Benutzer des Ortungsgeräts die Bedienung erleichtert und insbesondere eine schnelle und effiziente Ortung von unter einer Untersuchungsoberfläche verborgenen Ortungsobjekten erlaubt. Vorteilhaft instruiert die Handlungsanweisung einen Benutzer des Ortungsgeräts zu einem gegebenen Zeitpunkt über insbesondere nötige und/oder sinnvolle nachfolgend durchzuführende Messschritte, d.h insbesondere über empfohlene Messpositionen, an denen vorteilhaft eine weitere Ortungsmessung durchzuführen ist.

Unter Systemparametern sind alle nötigen oder sinnvollen, die Eigenschaften des Ortungsgeräts charakterisierende Informationen zu verstehen. Bevorzugt sind derartige Systemparameter bereits vor einem Ortungsvorgang bekannt und/oder bestimmbar. Beispielsweise kann es sich bei Systemparametern um die Komponenten des Ortungsgeräts charakterisierende Informationen handeln, die wesentliche Einflussgrößen und/oder Konstanten bezogen auf die Funktionsweise des Ortungsgeräts und/oder dessen Ergebnisse darstellen. Beispielsweise kann ein typischer Systemparameter eine Genauigkeits- und/oder Toleranzangabe zu einer Messgenauigkeit der Ortungsvorrichtung oder zu einer Verarbeitungsgeschwindigkeit der Auswertevorrichtung betreffen. Ebenfalls kann ein typischer Systemparameter eine Information über Eigenschaften von verwendeten Interpolationsalgorithmen oder dergleichen betreffen. Bevorzugt stellen die Systemparameter quantifizierbare Größen dar.

Unter "Zugewinn an die Ortung betreffenden Karteninformationen" ist verfahrensgemäße die Anreicherung einer bereits vorhandenen zumindest zweidimensionalen Karteninformation mit weiteren, insbesondere bislang nicht verfügbaren Karteninformationen zu verstehen. Dabei werden bevorzugt Ortungsdaten zu solchen Positionsdaten in die zumindest zweidimensionale Karteninformation aufgenommen, für die bislang keine Ortungsinformation in Folge eines Ortungsvorgangs an entsprechender Messposition und/oder für die bislang keine Ortungsinformation in Folge einer Interpolation und/oder für die bislang keine Ortungsinformation in Folge einer Extrapolation vorliegt.

Unter "optimierter Zugewinn an die Ortung betreffenden Karteninformationen" ist zu verstehen, dass, sofern das Ortungsgerät verfahrensgemäß entsprechend der Handlungsanweisung zum Führen des Ortungsgeräts umpositioniert wird, ein insbesondere verbesserter, bevorzugt verstärkter, besonders bevorzugt maximierter Zugewinn an die Ortung betreffenden Karteninformationen die Folge ist. Mit anderen Worten können bei vorgegebener Anzahl von zusätzlich zu den bereits untersuchten Messpositionen Rₙ auf der Untersuchungsoberfläche durch Umpositionieren anzufahrenden Messpositionen auf der Untersuchungsoberfläche die die Ortung betreffenden Karteninformationen besonders, bevorzugt stark, besonders bevorzugt maximal erhöht werden.

Bevorzugt kann somit ein optimierter Zugewinn an die Ortung betreffenden Karteninformationen situationsabhängig stets besonders schnell und in Bezug auf eine auf der Untersuchungsoberfläche durch Umpositionieren des Ortungsgeräts zurückzulegende Distanz stets besonders effizient realisiert werden. Ferner wird durch Ableitung einer Handlungsanweisung zum Führen des Ortungsgeräts in erfindungsgemäßem Verfahren eine Gefahr von Fehlbedienung des erfindungsgemäßen Ortungsgeräts verringert, da der Anwender situationsabhängig über anstehende Umpositionierungsschritte, insbesondere auch deren Richtung, informiert und somit Schritt für Schritt zu einer erfolgreichen Anwendung des Ortungsgeräts geführt werden kann. Das erfindungsgemäße Verfahren ermöglicht es somit dem Anwender des erfindungsgemäßen Ortungsgerätes, selbst bei komplexen Ortungsverhältnissen das entsprechende Ortungsgerät sicher und zielführend zu bedienen.

Darüber hinaus ermöglicht das erfindungsgemäße Verfahren die Berechnung von Informationen für bildgebende Ortungsgeräte und deren Umsetzung in eine konkrete Handlungsanweisung an den Benutzer zum Führen des Ortungsgeräts, die es erlauben, eine schnelle und für den Benutzer wenig aufwändige Verbesserung einer Qualität der gemessenen Ortungsdaten - und somit im Falle einer grafischen Ausgabe der Ortungsdaten an einen Benutzer des Ortungsgeräts auch einer Qualität der angezeigten Ortungsdaten - herbeizuführen und/oder zu erreichen. Vorteilhaft wird ein Benutzer bei der Benutzung des bildgebenden Ortungsgeräts, ferner bei der Interpretation der Messergebnisse, vor Fehlern geschützt, insbesondere weil das Auffinden verborgener Gegenstände, beispielsweise von Bewehrungen, Rohren, Kabeln oder dergleichen in einer Wand, verlässlicher erfolgt.

In einer bevorzugten Ausführungsform des erfindungsgemäßen Verfahrens zum Betrieb eines bildgebenden Ortungsgeräts wird die Handlungsanweisung unter Verwendung der Auswertevorrichtung durch Optimierung einer Zielfunktion berechnet.

Vorteilhaft kann in erfindungsgemäßem Verfahren die mathematisch komplexe Aufgabe des Ableitens und Auffindens einer Handlungsanweisung zum Führen des Ortungsgeräts, bei der ein optimierter Zugewinn an die Ortung betreffenden Karteninformationen ermöglicht wird, mittels der mathematischen Methode der Optimierung durchgeführt werden. Durch Definition und anschließende Optimierung einer Zielfunktion lässt sich auf vorteilhaft einfache und schnelle Weise eine Lösung der dem Ableiten der Handlungsanweisung zu Grunde liegenden mathematisch komplexen Aufgabe finden. Insbesondere handelt es sich bei der zu lösenden Aufgabe des Ableitens der Handlungsanweisung um die Optimierung eines Systems, das aus definierten, insbesondere situationsabhängigen, Parametern besteht. Besonders bevorzugt kann somit eine Lösung des Optimierungsproblemen und somit das Ableiten der Handlungsanweisung zum Führen des Ortungsgeräts, bei der ein optimierter Zugewinn an die Ortung betreffenden Karteninformationen ermöglicht wird, auf ein numerisches Verfahren reduziert werden.

Insbesondere ist dabei unter der Optimierung zu verstehen, dass ein unter den gegebenen, situationsabhängigen Bedingungen bestes erreichbares Resultat im Sinne eines Kompromisses zwischen den die situationsabhängigen Bedingungen charakterisierenden Parametern oder Eigenschaften erzielt wird.

Zur Durchführung des erfindungsgemäßen Verfahrens wird eine Zielfunktion aufgestellt bzw. definiert, die bevorzugt aus den vorliegenden Daten, insbesondere aus Ortungsdaten und/oder aus Positionsdaten und/oder aus Systemparametern, eine Qualität der vorliegenden zumindest zweidimensionalen Karteninformation definiert. Durch Optimierung der Zielfunktion, insbesondere durch lineare und/oder nichtlineare Optimierung der Zielfunktion, wird ermittelt, durch Hinzunahme welcher Daten, d.h. insbesondere durch Hinzunahme von Ortungsdaten an welchen weiteren "empfohlenen" Messpositionen, die Qualität bevorzugt verbessert, besonders bevorzugt maximiert werden kann. Vorteilhaft können dabei Randbedingungen durch die genaue Ausgestaltung, insbesondere durch die genaue Definition, der Zielfunktion berücksichtigt werden.

In einer bevorzugten Ausführungsform des erfindungsgemäßen Verfahrens zum Betrieb eines bildgebenden Ortungsgeräts wird die Handlungsanweisung durch Optimierung einer Zielfunktion unter Berücksichtigung zumindest eines Parameters aus einer Gruppe von Parametern berechnet, wobei die Gruppe von Parametern zumindest umfasst:
- eine Verteilung der Positionsdaten des Ortungsgeräts,
- ein Signal-zu-Rauschverhältnis der Ortungsdaten an unterschiedlichen Positionen des Ortungsgeräts bezogen auf die Untersuchungsoberfläche,
- eine α-priori Kenntnis über Eigenschaften verwendeter Auswerte- und/oder Interpolationsalgorithmen,
- eine Abweichung in der Korrelation benachbarter Ortungsdaten,
- eine α-priori und/oder während der Ortung erhaltene Kenntnis über Wahrscheinlichkeiten für Abweichungen zwischen einer erwarteten und einer tatsächlichen Position des Ortungsgeräts bezogen auf die Untersuchungsoberfläche.

"Optimierung einer Zielfunktion unter Berücksichtigung eines Parameters" bedeutet insbesondere, dass der entsprechende Parameter in die zu optimierende Zielfunktion einfließt und somit eine mathematische Abhängigkeit der Zielfunktion - und somit auch der erhaltenen Lösung - von dem entsprechenden Parameter gegeben ist.

Die Parameter aus der Gruppe von Parametern können dabei einzeln oder in Kombination in der Zielfunktion berücksichtigt sein. Insbesondere sei auch angemerkt, dass eine Zielfunktion in Abhängigkeit ermittelter Ortungsdaten und/oder in Abhängigkeit ermittelter Positionsdaten und/oder in Abhängigkeit von Systemparametern des Ortungsgeräts und somit bevorzugt an eine Messsituation angepasst, besonders bevorzugt situationsbezogen, unterschiedlich definiert sein kann. Auf diese Weise lässt sich realisieren, dass die Zielfunktion situationsbezogen unterschiedliche Parameter aus zumindest der Gruppe von Parametern einzeln oder in unterschiedlicher Kombination berücksichtigt.

Bevorzugt kann eine der Optimierung zu Grunde zu legende Zielfunktion wählbar gestaltet sein, sodass in erfindungsgemäßem Verfahren entweder in Folge einer manuellen Wahl durch den Benutzer oder in Folge einer automatischen Wahl durch das Ortungsgerät eine unterschiedliche Zielfunktion verwendet wird.

Die genannten Parameter stellen jeweils Problemstellungen oder Randbedingungen, mathematisch gesprochen Nebenbedingungen, für die zu optimierende Zielfunktion dar. Die Zielfunktion wird bevorzugt unter Berücksichtigung dieser Parameter optimiert, um eine Handlungsanweisung abzuleiten, die zu einem auf die gegebenen, insbesondere situationsabhängigen Randbedingungen angepassten optimierten Zugewinn an die Ortung betreffenden Karteninformationen führt. Die Parameter repräsentieren insbesondere folgende Randbedingungen:
Randbedingung 1: Je weiter Rasterpunkte, für die Ortungsdaten mittels Interpolation berechnet werden sollen, von Positionsdaten Rₙ bereits ermittelter Ortungsdaten entfernt sind, desto geringer ist die Sicherheit über die an diesen Rasterpunkten (synonym: Positionskoordinaten) durch Inter- oder/oder Extrapolation berechenbaren Ortungsdaten. Geringere Abstände wären somit in einer Optimierung zu bevorzugen.

Randbedingung 2: An bestimmten Positionen Rₙ, an denen bereits mit dem Ortungsgerät Ortungsdaten gemessen wurden, ist das Signal-zu-RauschVerhältnis, beispielsweise sensorbedingt oder bedingt durch äußere Einflüsse, gering. In diesem Fall ist eine Erhöhung des Signal-zu-Rausch-Verhältnisses durch Erhöhung der Anzahl von Ortungsvorgängen in unmittelbarer Umgebung zu den Messpositionen Rₙ der bereits durchgeführten Ortungsvorgänge oder alternativ Erhöhung einer Messdauer in unmittelbarer Umgebung zu den Messpositionen Rₙ der bereits durchgeführten Ortungsvorgänge realisierbar. Eine Erhöhung von Messpositionen und/oder Messdauern in Bereichen, in denen ungünstige Signal-zu-Rausch-Verhältnisse vorliegen, wären somit in einer Optimierung zu bevorzugen.

Randbedingung 3: Interpolationsalgorithmen haben teilweise Vorzugsverteilungen hinsichtlich der Positionsdaten Rₙ mit zugehörigen Ortungsdaten, für die sie optimale Interpolationsergebnisse liefern. Bei in einer bestimmten Richtung verlaufenden Ortungsobjekten kann somit die Wahl des Interpolationsalgorithmus bzw. die Wahl von mittels eines Interpolationsalgorithmus zu interpolierenden Ortungsdaten einen Einfluss auf die Sicherheit der Interpolationsergebnisse haben. Eine Interpolation von in Richtung der Vorzugsverteilung verlaufenden Ortungsdaten wäre somit in einer Optimierung zu bevorzugen.

Randbedingung 4: Der Positionssensor liefert fehlerhafte oder nur ungenaue Positionsdaten, deren Fehler sich über die Zeit insbesondere aufsummieren können. Dies kann zu einer Abweichung der Ist-Position des Ortungsgeräts von einer geschätzten Soll-Position des Ortungsgeräts führen. Ortungswerte können daher falschen Positionsdaten Rₙ zugeordnet sein.

In einer bevorzugten Ausführungsform des erfindungsgemäßen Verfahrens zum Betrieb eines bildgebenden Ortungsgeräts ist die Zielfunktion als Summe von Abweichungen von Abstandsgrößen von einer mittleren Abstandsgröße definiert, wobei eine Abstandsgröße für jeden Rasterpunkt zumindest einer Teilmenge aller Rasterpunkte als mittlerer Abstand des Rasterpunkts zu N nächsten Messpositionen Rₙ berechnet wird und die mittlere Abstandsgröße als Mittelwert der Abstandsgrößen berechnet wird.

Auf diese Weise kann vorteilhaft bewertet werden, ob die Ortungsdaten an den Messpositionen Rₙ, an denen bereits ein Ortungsvorgang durchgeführt wurde, geeignet sind, um die zumindest zweidimensionale Karteninformation durch Interpolation von benachbarten Ortungsdaten an den Rasterpunkten der zumindest zweidimensionalen Karteninformation zu vervollständigen. Dazu werden insbesondere die Abstände zwischen Rasterpunkten und Messpositionen Rₙ als Kriterium herangezogen. Für jeden Rasterpunkt wird ein mittlerer Abstand zu allen Messpositionen Rₙ bestimmt. Die Optimierung der Zielfunktion führt dann zu einer Lösung, insbesondere zu einer Handlungsanweisung zum Führen des Ortungsgeräts, für die in Folge ihrer Befolgung alle mittleren Abstände für alle Rasterpunkte gleich werden. Durch Befolgen der somit erhaltenen Handlungsanweisung kann, ausgehend von den bereits vorhandenen Ortungsdaten an den Messpositionen Rₙ, ein optimierter Zugewinn an die Ortung betreffenden Karteninformationen erhalten werden.

Derart ist die Zielfunktion unter Berücksichtigung des mittleren Abstands zwischen Rasterpunkten, d.h. solchen Positionskoordinaten (Rasterpunkten) der zumindest zweidimensionalen Karteninformation, an denen Ortungsdaten durch Interpolation berechnet wurden und/oder werden, und tatsächlichen Messpositionen Rₙ, d.h. solchen Positionsdaten, an denen Ortungsdaten bereits durch Ortung gemessen wurden, definiert. In erfindungsgemäßem Verfahren wird durch Optimierung der Zielfunktion, insbesondere Minimierung der Zielfunktion, eine Handlungsanweisung als Lösung des Optimierungsproblems abgeleitet. Diese Handlungsanweisung erlaubt, sofern ein Benutzer das Ortungsgerät entsprechend dieser Handlungsanweisung führt, unter Hinzunahme einer gegebenen, möglichst kleinen Anzahl an weiteren auf der Untersuchungsoberfläche durchzuführenden (empfohlenen) Messungen an Messpositionen Rₙ' einen optimierten Zugewinn an die Ortung betreffenden Karteninformationen zu erhalten.

Für die Anzahl (geometrisch) nächster Messpositionen Rₙ, zu denen der mittlere Abstand berechnet wird, sind verschiedene Ausführungsformen denkbar.

In einer bevorzugten Ausführungsform des erfindungsgemäßen Verfahrens zum Betrieb eines bildgebenden Ortungsgeräts wird die Abstandsgröße als minimaler Abstand eines Rasterpunkts zu einer nächsten Messposition Rₙ berechnet. N entspricht somit 1.

In einer alternativen bevorzugten Ausführungsform des erfindungsgemäßen Verfahrens zum Betrieb eines bildgebenden Ortungsgeräts wird die Abstandsgröße als mittlerer Abstand eines Rasterpunkts zu der Gesamtheit aller Messposition Rₙ berechnet. N entspricht somit der Anzahl der Messposition, an denen bereits Ortungsvorgänge durchgeführt wurden.

Ferner sind weitere sinnvolle Werte für die Anzahl nächster Messpositionen Rₙ, zu denen der mittlere Abstand berechnet wird, denkbar, beispielsweise 2, 4 oder dergleichen.

Es sei darauf hingewiesen, dass unter "mittlerer Abstand" zwar als ein mittlerer Abstand im Sinne einer Statistik zu verstehen ist, beispielsweise ein Median, ein Arithmetisches Mittel, ein Geometrisches Mittel, ein Harmonisches Mittel, ein Quadratisches Mittel, ein Kubisches Mittel, oder dergleichen. Allerdings ist der mittlere Abstand nicht auf die genannten Beispiele begrenzt. Darüber hinaus sind somit auch andere, einem Fachmann sinnvoll erscheinende Berechnungsvorschriften zur Ermittlung eines Erwartungswerts einer Häufigkeits- oder Wahrscheinlichkeitsverteilung in dem erfindungsgemäßen Verfahren zur Definition des mittleren Abstands verwendbar.

In einer bevorzugten Ausführungsform des erfindungsgemäßen Verfahrens zum Betrieb eines bildgebenden Ortungsgeräts ist die Zielfunktion als eine Verteilungsfunktion definiert, wobei der Wert der Verteilungsfunktion an einem Ort mit einer Streuung der Ortungsdaten in einer Umgebung des Ortes skaliert und der Skalierungsfaktor von einer Anzahl der Ortungsdaten in der Umgebung abhängt.

Zusätzlich zu bereits ermittelten Ortungsdaten an den Messpositionen Rₙ sollen weitere Ortungsdaten durch weitere Ortungsmessungen an empfohlenen Messpositionen, insbesondere weiteren Messpositionen Rₙ', d.h. an mittels des Optimierungsverfahrens berechneten Messpositionen, ermittelt werden, um die zumindest zweidimensionale Karteninformation mit diesen Ortungsdaten vorteilhaft anreichern zu können. Aus den bereits vorhandenen Ortungsdaten wird eine Zielfunktion definiert, der der Gedanke zu Grunde liegt, weitere "empfohlene" Messpositionen durch Optimierung zu bestimmen, denen hinsichtlich der zu erstellenden Karteninformation eine besondere Bedeutung zukommt. Insbesondere wird die Zielfunktion bevorzugt mittels einer statistischen Verteilungsfunktion definiert, in der eine räumliche Dichte bereits gemessener Ortungsdaten an Messpositionen Rₙ sowie deren Streuung innerhalb einer definierten, vorgebbaren Umgebung einer möglichen weiteren Messposition für eine zu berechnende mögliche Messposition eingehen. Unter der möglichen Messposition ist eine beliebige weitere Messposition, d.h. insbesondere beliebige Positionskoordinaten, zu verstehen, die insbesondere unabhängig von einem Raster sind. Somit kann ausgehend von einer Eigenschaftsverteilung der bereits ermittelten Ortungsdaten, beispielsweise definiert als die Anzahl möglichst eindeutig identifizierbarer Folgen von Ortungsdaten in der Umgebung eines Rasterpunkts, die Zielfunktion definiert und optimiert werden. Bevorzugt werden derart möglichen Messpositionen, die in ihrer definierten Umgebung eine hohe Dichte bereits gemessener Ortungsdaten, besonders bevorzugt hoher Streuung, aufweisen, eine hohe Bedeutung zugeordnet. Besonders bevorzugt werden weiteren möglichen Messpositionen in der Nähe dieser möglichen Messpositionen eine noch höhere Bedeutung zugeordnet. Die Optimierung, insbesondere Maximierung, dieser Zielfunktion ergibt diejenigen empfohlenen Messpositionen Rₙ' vorgegebener Anzahl, deren Hinzunahme in einem Ortungsvorgang einen optimierten Zugewinn an die Ortung betreffenden Karteninformationen ergibt. Die empfohlenen Messpositionen Rₙ' liegen dabei zunächst in einer Umgebung von bereits angefahrenen Messpositionen, in deren definierter Umgebung eine hohe Dichte von gemessenen Ortungsdaten, bevorzugt hoher Streuung, bereits vorliegt. Ferner werden bevorzugt einige weitere empfohlene Messpositionen Rₙ' berechnet, die außerhalb der definierten Umgebung liegen. Die Korrelation der Ortungsdaten mit zuvor in dieser Umgebung aufgenommenen Ortungsdaten erlaubt besonders vorteilhaft eine besonders gute Bestimmung von Positionsabweichungen sowie deren Verringerung.

Unter der zumindest einen Trajektorie ist insbesondere ein Pfad und/oder eine Bahnkurve zu verstehen. Bevorzugt kennzeichnet die zumindest eine Trajektorie einen Pfad und/oder eine Bahnkurve bezogen auf die Untersuchungsoberfläche. Die zumindest eine Trajektorie stellt eine bevorzugte Repräsentation und/oder Umsetzung der Handlungsanweisung dar, entlang derer das Ortungsgerät zu führen ist, um einen optimierten Zugewinn an die Ortung betreffenden Karteninformationen zu erhalten. Somit umfasst die zumindest eine Trajektorie zumindest diejenigen empfohlenen Messpositionen Rₙ', deren Hinzunahme in den Ortungsvorgang einen optimierten Zugewinn an die Ortung betreffenden Karteninformationen ergibt. Insbesondere ist unter Verwendung der zumindest einen Trajektorie eine zeitliche Abfolge durchzuführender Umpositionierungen des Ortungsgeräts, d.h. eine Reihenfolge der durch Umpositionierung des Ortungsgeräts anzusteuernder empfohlener Messpositionen Rₙ', darstellbar. Die zumindest eine Trajektorie erlaubt vorteilhaft eine besonders intuitive Darstellung und Interpretation der Handlungsanweisung.

Neben der zumindest einen Trajektorie können insbesondere auch weitere Trajektorien realisiert sein. Beispielsweise kann eine derartige weitere Trajektorie eine aktualisierte Trajektorie und/oder eine Trajektorie, die lediglich einen eingeschränkten Bereich der Untersuchungsoberfläche abdeckt und/oder eine aus einer Mehrzahl von einzelnen Teil-Trajektorien bestehende Trajektorie oder dergleichen darstellen.

In einer bevorzugten Ausführungsform des erfindungsgemäßen Verfahrens zum Betrieb eines bildgebenden Ortungsgeräts wird die zumindest eine Trajektorie mittels eines Traveling-Salesman-Algorithmus aus denjenigen (empfohlenen) Messpositionen Rₙ' berechnet, deren Hinzunahme in den Ortungsvorgang einen optimierten Zugewinn an die Ortung betreffenden Karteninformationen ergibt.

Derart kann durch einen weiteren Optimierungsschritt im erfindungsgemäßen Verfahren die Reihenfolge anzusteuernder empfohlener Messpositionen Rₙ' berechnet, bevorzugt sortiert, besonders bevorzugt optimiert werden. Insbesondere kann somit erreicht werden, dass die zumindest eine Trajektorie, interpretierbar als Verbindung der hintereinander anzusteuernden Messpositionen Rₙ', vorteilhaft eine besonders kurze, bevorzugt minimale Streckenlänge aufweist. Somit kann eine Handlungsanweisung in Form einer hinsichtlich Streckenlänge optimierten zumindest einen Trajektorie abgeleitet werden, die zu einem besonders schnell und effizient durchführbaren Ortungsvorgang beiträgt.

Ferner erscheint die von dem Ortungsgerät an den Benutzer ausgegebene Handlungsanweisung, insbesondere die zumindest eine Trajektorie, sowie die darin einfließende, von dem Benutzer deutbare Strategie, als besonders intelligent.

In einer bevorzugten Ausführungsform des erfindungsgemäßen Verfahrens zum Betrieb eines bildgebenden Ortungsgeräts wird die zumindest eine Trajektorie in Form eines auf einer Anzeigevorrichtung dargestellten Linienzugs und/oder in Form von auf einer Anzeigevorrichtung dargestellten Zielpunkten ausgegeben.

Unter einer Anzeigevorrichtung ist eine Vorrichtung zu verstehen, die dazu vorgesehen ist, zumindest die zumindest eine Trajektorie in Form eines Linienzugs und/oder in Form von Zielpunkten auszugeben. Unter der Anzeigevorrichtung soll in diesem Zusammenhang insbesondere eine Vorrichtung verstanden werden, die ein bevorzugt flächiges, zweidimensionales Anzeigeelement aufweist, das zu einer bildhaften Anzeige bzw. Ausgabe der zumindest einen Trajektorie in Form eines Linienzugs und/oder in Form von Zielpunkten vorgesehen ist. Die Anzeigevorrichtung ist dazu mit der Auswertevorrichtung und/oder mit der Steuervorrichtung des Ortungsgeräts zur Übermittlung von Daten verbunden. Die Anzeigevorrichtung kann dabei mittels Datenkabeln oder drahtlos mit der Auswertevorrichtung und/oder mit der Steuervorrichtung verbunden sein. Es ist denkbar, dass die Auswertevorrichtung in der Anzeigevorrichtung integriert ist oder dass die Anzeigevorrichtung auch mit Komponenten der Auswertevorrichtung als ein einzelnes Bauteil ausgeführt ist. Das flächige Anzeigeelement der Anzeigevorrichtung kann vorteilhaft beispielsweise als eine Flüssigkristallanzeige, eine OLED-Anzeige, eine LED-Anzeige, ein Bildschirm, der für eine andere geeignete Anzeigetechnik vorgesehen ist, oder als ein Projektor realisiert sein. Es ist auch denkbar, dass die Anzeige 3D-fähig ausgebildet ist und Mittel umfasst, die dazu vorgesehen sind, bei einem Benutzer einen dreidimensionalen Bildeindruck zu vermitteln. Vorzugsweise ist die Anzeigevorrichtung zur Darstellung von Graustufen, besonders bevorzugt zur Darstellung von Farben vorgesehen. Bevorzugt kann somit die zumindest eine Trajektorie unter Verwendung einer Farb- oder Graustufencodierung an einen Benutzer des Ortungsgeräts ausgegeben werden. Durch Darstellung und Ausgabe der zumindest einen Trajektorie an einen Benutzer des Ortungsgeräts mittels der Anzeigevorrichtung kann ein besonders kompaktes, flexibles und unmittelbar einsetzbares Ortungsgerät bereitgestellt werden.

Grundsätzlich ist auch denkbar, dass die Anzeigevorrichtung nur getrennt von dem Ortungsgerät ausgebildet ist und über eine drahtlose Verbindung zu einer Übermittlung von Ausgabewerten verbunden ist, beispielsweise über eine Punkt-zu-Punkt Verbindung, ad-hoc Verbindung, eine WLAN-Verbindung, eine Bluetooth-Verbindung oder dergleichen.

Bevorzugt ist die von der Anzeigevorrichtung dargestellte zumindest eine Trajektorie zu einer Interpretation durch einen menschlichen Betrachter vorgesehen. In einer bevorzugten Ausführungsform wird die zumindest eine Trajektorie in Form eines Linienzug und/oder in Form von Zielpunkten ausgegeben, wobei der Linienzug eine Verbindung der anzusteuernden (empfohlenen) Messpositionen Rₙ' darstellt. Die Zielpunkte geben entweder lediglich die Positionen der anzusteuernden Messpositionen Rₙ' in der Darstellung wieder oder stellen ebenfalls eine Verbindung der anzusteuernden Messpositionen Rₙ', dar, jedoch lediglich reduziert auf eine wesentliche Anzahl von wichtigen und/oder markanten Zielpunkten, die der Orientierung des Benutzers und insbesondere der Übertragung der auf mittels der Anzeigevorrichtung ausgegebenen Trajektorie bezogen auf die Untersuchungsoberfläche dienen. Der zumindest einen Trajektorie ist bevorzugt unmittelbar zu entnehmen, an welchen Stellen der Untersuchungsoberfläche, d.h. insbesondere unter welchen Richtungen von dem Ortungsgerät aus gesehen, weitere empfohlene Messpositionen durch Umpositionieren des Ortungsgeräts angefahren werden müssen, um dort jeweils zumindest eine Ortung durchzuführen, die zu einem optimierten Zugewinn an die Ortung betreffenden Karteninformationen führt.

Die zumindest eine Trajektorie, insbesondere der Linienzug und/oder die Zielpunkte, können beispielsweise maßstabgetreu bezogen auf die Untersuchungsoberfläche, insbesondere unter Anwendung eines Abbildungsmaßstabs, dargestellt werden. Auf diese Weise ist eine besonders einfache Übertragung von Positionen der anzusteuernden Messpositionen auf das Werkstück möglich. Insbesondere können sowohl maßstäbliche als auch unmaßstäbliche Darstellungen zur Ausgabe an einen Benutzer des Ortungsgeräts verwendet werden. Alternativ oder zusätzlich kann eine situationsabhängig skalierte Darstellung der zumindest einen Trajektorie, insbesondere des Linienzugs und/oder der Zielpunkte, verwendet werden.

Alternativ oder zusätzlich kann die zumindest eine Trajektorie auch in einzelnen Teil-Trajektorien, beispielsweise einzelnen Streckenabschnitten, die einer Umpositionierung des Ortungsgerät in eine Richtung implizieren, die bevorzugt hintereinander bis zum Erreichen der jeweils nächsten anzusteuernden empfohlenen Messposition dargestellt werden, an einen Benutzer des Ortungsgeräts ausgegeben werden.

Es sei angemerkt, dass die Anzeigevorrichtung, insbesondere das Anzeigeelement, neben der Ausgabe der zumindest einen Trajektorie auch zur Ausgabe oder Darstellung einer Karte sowie weiterer, zur Bedienung und Steuerung des Ortungsgeräts relevanten, notwendigen und/oder sinnvollen Arbeitsparameter, vorgesehen sein kann.

In einer bevorzugten Ausführungsform des erfindungsgemäßen Verfahrens zum Betrieb eines bildgebenden Ortungsgeräts wird die zumindest eine Trajektorie durch Einfärbung und/oder variierende Transparenz einer unter Verwendung einer Anzeigevorrichtung als Karte dargestellten zumindest zweidimensionalen Karteninformation ausgegeben.

Insbesondere ist die Anzeigevorrichtung dazu vorgesehen, eine in Form einer insbesondere mehrdimensionalen Matrix, Tabelle, Array, Liste oder dergleichen bereitgestellte zumindest zweidimensionale Karteninformation zu verarbeiten und als Karte auf einer Anzeigeeinheit, beispielsweise einem Display, darzustellen. Bevorzugt ist die Anzeigevorrichtung dabei zur Darstellung einer zumindest zweidimensionalen Karteninformation in Form einer farb- oder graustufencodierten Karte vorgesehen. Die Anzeigevorrichtung ist dabei vorteilhaft dazu vorgesehen ist, Ortungsinformationen, insbesondere Ortungsdaten, in ein Darstellungsattribut zur bildhalten Wiedergabe umzusetzen, wie beispielsweise in eine Grauwertstufe, einen Grauwert eines Grauwerteverlaufs, eine Farbwertstufe, einen Farbwert eines Farbverlaufs, eine Helligkeitsstufe, einen Helligkeitswert eines Helligkeitsverlaufs, eine Sättigungsstufe oder einen Sättigungswert eines Sättigungsverlaufs und/oder ein Muster und/oder ein Symbol. Vorzugsweise ist die Anzeigevorrichtung vorgesehen, eine Karte als bildhafte Darstellung einer zumindest zweidimensionalen Karteninformation auszugeben. Unter einer bildhaften Darstellung oder Anzeige soll in diesem Zusammenhang insbesondere eine optische, vorzugsweise im Wesentlichen maßstäbliche und positionsaufgelöste Wiedergabe der Ortungsdaten verstanden werden. Vorteilhaft gibt die dargestellte Karte die Untersuchungsoberfläche hinsichtlich des durch Umpositionieren des Ortungsgeräts untersuchten Bereichs der Untersuchungsoberfläche wieder. Bevorzugt ist die bildhafte Anzeige zu einer Interpretation durch einen menschlichen Betrachter vorgesehen. In einer bevorzugten Ausführungsform wird die Karte als ein zweidimensionales Bild ausgegeben, das ein Abbild der Ortungsverhältnisse unter der Untersuchungsoberfläche darstellt. Der Karte ist bevorzugt unmittelbar zu entnehmen, an welchen Stellen der Untersuchungsoberfläche, d.h. insbesondere unter welchen Richtungen von der Ortungsvorrichtung aus gesehen, Ortungsobjekte detektiert werden. In einer beispielhaften Ausführungsform kann ein angezeigter Ausschnitt der zumindest zweidimensionalen Karteninformation einen Abbildungsmaßstab aufweisen, der einem Verhältnis von Erstreckungen der Karteninformation im Anzeigeelement zu Erstreckungen eines zugeordneten Bereichs der Untersuchungsoberfläche entspricht. Der Abbildungsmaßstab weist vorteilhafterweise einen gleichen Abbildungsmaßstab für eine erste Dimension und für eine zweite Dimension auf. Besonders bevorzugt ist der Abbildungsmaßstab durch einen Benutzer des Ortungsgeräts veränderbar, sodass eine im Anzeigeelement dargestellte Karteninformation vergrößert oder verkleinert und somit gezoomt werden kann. Ferner können sowohl maßstäbliche als auch unmaßstäbliche Darstellungen zur Ausgabe an einen Benutzer des Ortungsgeräts verwendet werden.

Bevorzugt ist die Anzeigevorrichtung dazu vorgesehen, durch eine hohe Verarbeitungsrate und Darstellungsrate bei einem Benutzer des Ortungsgeräts den Eindruck zu erwecken, dass Ortungsdaten für einen mit dem Ortungsgerät überfahrenen Bereich unmittelbar, bevorzugt in Echtzeit, ausgewertet und als Ortungs- und/oder Karteninformation dargestellt werden. Mit einer Darstellung in Echtzeit ist insbesondere gemeint, dass die geräteinterne Verarbeitungsdauer durch die Anzeigevorrichtung bis zur fertigen Darstellung der Ortungsinformation auf dem Anzeigeelement weniger als 2 Sekunden, bevorzugt weniger als 1 Sekunde, besonders bevorzugt weniger als 0.5 Sekunde beträgt.

Unter Verwendung der mittels der Anzeigevorrichtung dargestellten Karte ist es dem Benutzer des Ortungsgeräts möglich, eine zumindest zweidimensionale Karteninformation durch sukzessives Überstreichen der Untersuchungsoberfläche mit dem Ortungsgerät zu generieren und gleichzeitig darzustellen. Somit erhält der Benutzer des Ortungsgeräts eine auf intuitive Weise interpretierbare Karte, aus der Ortungsinformationen betreffend die Untersuchungsoberfläche zu entnehmen sind. Mit einer sukzessiven Vermessung einer Untersuchungsoberfläche in Folge eines Umpositionierens des Ortungsgeräts bezogen auf die Untersuchungsoberfläche erhält der Benutzer des Ortungsgeräts eine übersichtliche, intuitiv und einfach interpretierbare, zumindest zweidimensionale Karte.

Erfindungsgemäß wird die zumindest eine Trajektorie durch Einfärbung und/oder variierende Transparenz der Karte an den Benutzer des Ortungsgeräts ausgegeben. Auf diese Weise kann eine auf besonders intuitive und einfache Weise verständliche Darstellung der Trajektorie erfolgen.

In einer bevorzugten Ausführungsform des erfindungsgemäßen Verfahrens zum Betrieb eines bildgebenden Ortungsgeräts wird der Verlauf der zumindest einen Trajektorie unter Verwendung von Richtungsindikatoren, insbesondere Pfeilen, ausgegeben.

Bevorzugt stellen die Richtungsindikatoren vereinfachte und intuitiv verständliche Interpretationshilfen und/oder Darstellungshilfen für die zumindest eine Trajektorie, insbesondere deren Verlauf, dar, die einem Benutzer des Ortungsgeräts das Auffinden nächster anzusteuernder (empfohlener) Messpositionen auf der Untersuchungsoberfläche erleichtern.

In einer bevorzugten Ausführungsform werden Richtungsindikatoren in Form von Pfeilen an den Benutzer des Ortungsgeräts ausgegeben. Derart kann eine besonders einfache und gleichzeitig besonders intuitiv verständliche Darstellung der zumindest einen Trajektorie erfolgen. Bevorzugt deuten die Richtungsindikatoren, insbesondere die Pfeile, den Verlauf der zumindest einen Trajektorie an. Dabei können die Richtungsindikatoren, insbesondere die Pfeile, den Verlauf der zumindest einen Trajektorie bis zur nächsten anzusteuernden Messposition in Form einer Richtungsvorgabe darstellen, in die das Ortungsgerät umpositioniert werden muss, um auf kürzestem Weg zu der entsprechenden empfohlenen Messposition zu gelangen. Somit zeigen die Pfeile eine einzuschlagende Richtung zur Umpositionierung des Ortungsgeräts an. Ferner kann ebenfalls vorgesehen sein, eine Entfernung an den Benutzer auszugeben, die die Distanz darstellt, um die das Ortungsgerät in die entsprechende Richtung umpositioniert werden muss, um zu der entsprechenden empfohlenen Messposition zu gelangen.

Alternativ oder zusätzlich können Richtungsindikatoren auch als andere, insbesondere synthetische, Elemente, beispielsweise in Form von Linien, Strichen, Dreiecken, Quadraten, Rechtecken, Symbolen oder dergleichen, dargestellt werden und/oder realisiert sein. Beispielsweise kann eine durchzuführende bzw. empfohlene Drehbewegung des Ortungsgeräts durch sich in eine entsprechende Richtung drehende Kreise ausgegeben werden.

Bevorzugt können die Richtungsindikatoren, insbesondere die Pfeile, mittels der Anzeigevorrichtung dargestellt werden. Insbesondere können die Richtungsindikatoren, insbesondere die Pfeile, mit einer mittels der Anzeigevorrichtung dargestellten Karte überlagert und/oder überblendet ausgegeben werden. Alternativ oder zusätzlich kann zumindest eine Signalausgabevorrichtung vorgesehen sein, die Richtungsindikatoren, insbesondere die Pfeile, an den Benutzer des Ortungsgeräts auszugeben. Unter einer Signalausgabevorrichtung ist dabei eine beliebige, dem Fachmann sinnvoll erscheinende Ausgabevorrichtung zu verstehen, die dazu vorgesehen ist, die Richtungsindikatoren, insbesondere die Pfeile, optisch, akustisch und/oder taktil an den Benutzer auszugeben. Beispielsweise kann es sich bei einer Signalausgabevorrichtung um LED-Anzeigeelemente handeln, die auf der einem Benutzer bei Anwendung des Ortungsgeräts zugewandten Seite des Ortungsgeräts unmittelbar an den vier Kanten liegend angeordnet sind. Mittels dieser LED-Anzeigeelemente können insbesondere Richtungsindikatoren durch Aufleuchten eines entsprechenden LED-Anzeigeelements ausgegeben werden, die die Richtung signalisieren, in die das Ortungsgerät umpositioniert werden muss, um zu der entsprechenden Messposition zu gelangen.

Vorteilhaft kann durch Ausgabe des Verlaufs der zumindest einen Trajektorie unter Verwendung von Richtungsindikatoren, insbesondere Pfeilen, eine besonders verständliche Darstellung der zumindest einen Trajektorie, insbesondere von Teil-Trajektorien der zumindest einen Trajektorie, erfolgen.

In einer Ausführungsform kann das Erreichen der unter Verwendung der Richtungsindikatoren ausgegebenen empfohlenen Messpositionen durch den Benutzer zu bestätigen sein, beispielsweise durch Tastendruck oder durch einen Stillstand des Ortungsgeräts. Alternativ kann vorgesehen sein, dass das Ortungsgerät, beispielsweise unter Verwendung der von dem Positionssensor bereitgestellten Positionsdaten, selbsttätig das Erreichen der unter Verwendung der Richtungsindikatoren ausgegebenen empfohlenen Messpositionen registriert. An das Erreichen einer empfohlenen Messpositionen kann sich unmittelbar die Ausgabe eines Richtungsindikators anschließen, der nun den Verlauf der zumindest einen Trajektorie bis zur nächsten anzusteuernden empfohlenen Messposition darstellt. Sofern der Benutzer des Ortungsgeräts das Ortungsgerät sukzessiv den Richtungsindikatoren folgend in die entsprechenden Richtungen umpositioniert, folgt er vorteilhaft dem kürzesten Weg, auf dem ein optimierter Zugewinn an die Ortung betreffenden Karteninformationen zu erwarten ist.

Es sei angemerkt, dass in einer Ausführungsform des erfindungsgemäßen Verfahrens die Handlungsanweisung, insbesondere die zumindest eine Trajektorie, auch in Form eines Spiels an den Benutzer ausgegeben werden können, beispielsweise in Form eines Spiels, bei dem der Benutzer bestimmten Spielfiguren folgen oder vor diesen fliehen muss (vgl. Spiel Pac-Man), oder in Form eines Spiels, bei dem die Aufgabe im Einsammeln von "Goodies" besteht. In einem derart gestalteten Verfahren kann die Verbesserung einer Anzeigequalität angezeigter Ortungsdaten spielerisch und somit besonders unterhaltsam und/oder kurzweilig erfolgen.

Ferner wird ein erfindungsgemäßes bildgebendes Ortungsgerät vorgeschlagen, insbesondere ein handgehaltenes Ortungsgerät, mit zumindest
- einer Ortungsvorrichtung, die dazu vorgesehen ist, Ortungsdaten zu unter einer Untersuchungsoberfläche verborgenen Ortungsobjekten zu erfassen,
- einem Positionssensor zur Erfassung von Positionsdaten des Ortungsgeräts bezogen auf die Untersuchungsoberfläche,
- einer Auswertevorrichtung, die dazu vorgesehen ist, durch Zuordnung von Ortungsdaten zu Positionsdaten eine zumindest zweidimensionalen Karteninformation zu bestimmen,
wobei die Auswertevorrichtung dazu vorgesehen ist, aus Ortungsdaten und Positionsdaten eine Handlungsanweisung als zumindest eine Trajektorie zu berechnen, entlang derer das Ortungsgerät zu führen ist, um einen optimierten Zugewinn an die Ortung betreffenden Karteninformationen zu erhalten.

Unter einem handgehaltenen Ortungsgerät soll insbesondere verstanden werden, dass das Ortungsgerät ohne Zuhilfenahme einer Transportmaschine lediglich mit den Händen, insbesondere mit einer Hand, transportiert werden kann. Insbesondere kann das Ortungsgerät auch während eines Ortungsvorgangs in einer von einem Benutzer des Ortungsgeräts frei ausgeführten Bewegung, insbesondere einer entlang zweier Richtungen freien Bewegung, handgehalten über die Untersuchungsoberfläche geführt werden. Unter einer freien Bewegung ist insbesondere eine Bewegung zu verstehen, die unabhängig ist von einem vorgegebenen Raster oder einer vorgegebenen Spur für die Umpositionierung des Ortungsgeräts, insbesondere für eine Bewegung oder einen Verfahrweg des Ortungsgeräts.

Das erfindungsgemäße Ortungsgerät weist bevorzugt ein Gehäuse auf, das zumindest die wesentlichen funktionalen Komponenten des Ortungsgeräts aufnimmt. Insbesondere nimmt das Gehäuse zumindest eine Steuervorrichtung, die Ortungsvorrichtung, den Positionssensor, die Auswertevorrichtung, eine Eingabe- und/oder eine Ausgabevorrichtung, insbesondere eine Anzeigevorrichtung, sowie eine Energieversorgungsvorrichtung auf. Insbesondere sind die Komponenten in ihrem Gesamtvolumen zu mehr als 50 %, bevorzugt zu mehr als 75 % und besonders bevorzugt zu 100 % in dem Gehäuse des Ortungsgeräts untergebracht. Vorzugsweise kann das handgehaltene Ortungsgerät einen Griff oder einen Griffbereich aufweisen, mit dem das Ortungsgerät über die Untersuchungsoberfläche des zu untersuchenden Gegenstands geführt werden kann. Die Masse des handgehaltenen Ortungsgeräts beträgt insbesondere weniger als 5 kg, vorteilhaft weniger als 3 kg und besonders vorteilhaft weniger als 1 kg. Auf diese Weise kann ein besonders kompaktes Ortungsgerät in Form eines leicht einhändig durch einen Benutzer führbaren Ortungsgeräts realisiert werden. Ferner lassen sich die Komponenten des Ortungsgeräts auf diese Weise vorteilhaft durch das Gehäuse des Ortungsgeräts vor Beschädigungen und Umwelteinflüssen, beispielsweise vor dem Eindringen von Feuchtigkeit und Staub, schützen.

Das Ortungsgerät weist ferner eine Steuervorrichtung zur Ansteuerung der funktionalen Komponenten des Ortungsgeräts auf, insbesondere zur Ansteuerung zumindest der Ortungsvorrichtung, des Positionssensors, der Auswertevorrichtung, bevorzugt auch einer Eingabe- und/oder einer Ausgabevorrichtung, einer Datenkommunikationsschnittstelle, einer Speichervorrichtung sowie weiteren, dem Fachmann als sinnvoll erscheinenden Komponenten. Unter der Steuervorrichtung soll insbesondere eine Vorrichtung mit zumindest einer Steuerelektronik verstanden werden, die Mittel zur Kommunikation mit den anderen Komponenten des handgehaltenen Ortungsgeräts aufweist. Insbesondere ist die Steuervorrichtung dazu vorgesehen, zumindest einen Betriebsfunktionsparameter des Ortungsgeräts in Abhängigkeit von zumindest einer Benutzereingabe und/oder einem Auswerteergebnis der Auswertevorrichtung einzustellen. Vorteilhaft kann unter der Steuerelektronik der Steuervorrichtung eine Prozessoreinheit in Verbindung mit einer Speichereinheit sowie mit einem in der Speichereinheit gespeicherten Betriebsprogramm verstanden werden, das während des Steuervorgangs ausgeführt wird. Insbesondere können die elektronischen Bauteile der Steuervorrichtung auf einer Platine oder Leiterplatte angeordnet sein, bevorzugt in Form eines Mikrokontrollers. Besonders vorteilhaft kann die Steuervorrichtung darüber hinaus dazu vorgesehen sein, das gesamte Ortungsgerät zu steuern und dessen Betrieb zu ermöglichen.

Eine Energieversorgungsvorrichtung des Ortungsgeräts ist dazu vorgesehen, das Ortungsgerät zur Inbetriebnahme und während des Betriebs mit elektrischer Energie zu versorgen. Bevorzugt handelt es sich bei dieser Vorrichtung um einen stromnetzunabhängigen Energiespeicher, insbesondere einen Akkumulator, eine Batterie, eine Brennstoffzelle, einen Kondensator, einen anderweitigen, dem Fachmann sinnvoll erscheinenden Energiespeicher oder eine Kombination/Mehrung derer. Vorzugsweise eigenen sich zur Energieversorgung des Ortungsgeräts insbesondere Akkumulatoren mit einer Zellchemie, die eine hohe Leistungs- und/oder Energiedichte bereitstellt. Dazu gehören derzeit beispielsweise Akkumulatoren der Lithium- und Lithium-Ionen-Zellchemie, insbesondere Lithium-Eisenphosphat-, Lithium-Manganoxid-, Lithium-Nickel-Kobalt-Mangan-Oxid-, überlithiierte Lithium-Nickel-Kobalt-Mangan-Oxid-, Lithium-Schwefel-, Lithium-Polymer- und Lithium-Sauerstoff-Akkumulatoren. Vorzugsweise weist die Vorrichtung zur Energieversorgung eine lösbare Formschluss- und/oder Kraftschlussverbindungsschnittstelle auf. Unter lösbar soll in diesem Zusammenhang insbesondere zerstörungsfrei trennbar verstanden werden. Somit ist die Vorrichtung zur Energieversorgung bevorzugt abnehmbar und austauschbar an dem Ortungsgerät anordenbar. Besonders bevorzugt lässt sich die abnehmbare Vorrichtung zur Energieversorgung in und/oder außerhalb des Ortungsgeräts wieder mit Energie aus einem Stromnetz versorgen und laden. In einer alternativen oder zusätzlichen Ausführungsform kann das Ortungsgerät zu seiner Energieversorgung auch einen Netzanschluss aufweisen.

In einer vorteilhaften Ausführungsform des erfindungsgemäßen Ortungsgeräts weist das Ortungsgerät eine Eingabevorrichtung zur Eingabe von Arbeitsparametern und/oder eine Ausgabevorrichtung zur Ausgabe von Arbeitsparametern auf. Arbeitsparameter bezeichnen dabei alle notwendigen und/oder sinnvollen Betriebsparameter des Ortungsgeräts, insbesondere zu dessen Steuerung, sowie Parameter betreffend die Auswertung der Messergebnisse.

Unter einer Eingabevorrichtung soll insbesondere ein Mittel verstanden werden, das dazu vorgesehen ist, zumindest eine Information von einem Benutzer des Ortungsgeräts anzunehmen und an die Steuervorrichtung und/oder die Auswertevorrichtung weiterzuleiten. Die Eingabevorrichtung kann beispielsweise in Form einer Benutzerschnittstelle und/oder unter Verwendung eines anderen Geräts realisiert sein. Dabei kann eine Benutzereingabe insbesondere über eine akustische, optische, gestengestützte und/oder taktile Eingabe durchgeführt werden. Beispielsweise kann die Eingabevorrichtung aus einem Betätigungselement, einer Tastatur, einem Display, insbesondere einem Touch-Display, einem Spracheingabemodul, einer Gestenerkennungseinheit und/oder einem Zeigegerät (beispielsweise einer Maus) bestehen. Ferner kann die Eingabevorrichtung zusätzlich auch außerhalb des Ortungsgeräts, insbesondere außerhalb des Ortungsgeräts, vorhanden sein, beispielsweise in Form eines externen Datengeräts wie einem Smartphone, einem Tablet-PC, einem PC, oder in Form eines anderen, einem Fachmann als sinnvoll erscheinenden externen Datengeräts, das über eine Datenkommunikationsschnittstelle mit der Steuervorrichtung und/oder der Auswertevorrichtung des Ortungsgeräts verbunden ist. Letzteres ist besonderes dann vorteilhaft, wenn das externe Datengerät eine erweiterte Funktionalität des Ortungsgeräts erlaubt und/oder unterstützt, beispielsweise eine speziell aufbereitete Eingabemöglichkeit oder dergleichen.

Unter einer Ausgabevorrichtung soll zumindest ein Mittel verstanden werden, das dazu vorgesehen ist, zumindest eine wechselnde Information akustisch, optisch und/oder taktil an einen Benutzer des Ortungsgeräts, insbesondere des Ortungsgeräts, auszugeben. Dies kann beispielsweise mittels eines Displays, eines Touch-Displays, eines Tonsignals, einer Veränderung eines Betriebsparameters, eines Vibrationsgebers und/oder einer LED-Anzeige realisiert werden. In einer besonders bevorzugten Ausführungsform kann die Ausgabevorrichtung als zumindest eine Anzeigevorrichtung realisiert sein. Ferner können auszugebende Informationen, beispielsweise Auswerteergebnisse und/oder Informationen betreffend einen Betriebszustand des Ortungsgeräts, auch an eine funktionale Komponente des Ortungsgeräts, insbesondere an die Steuervorrichtung, an eine Speichervorrichtung, an zumindest eine Ortungsvorrichtung, an den Positionssensor, an die Auswertevorrichtung und/oder, insbesondere zur Erhöhung des Benutzerkomforts, an ein Daten verarbeitendes System ausgegeben werden. Letzteres umfasst zumindest auch eine Ausgabe einer Information an ein externes Gerät wie ein Smartphone, ein Tablet-PC, ein PC sowie an ein anderes, einem Fachmann als sinnvoll erscheinendes externes Datengerät, das über eine Datenkommunikationsschnittstelle mit der Auswertevorrichtung und/oder der Steuervorrichtung des Ortungsgeräts verbunden ist.

Sowohl die Eingabevorrichtung als auch die Ausgabevorrichtung können vorteilhaft direkt im Gehäuse des Ortungsgeräts untergebracht sein. Bevorzugt ist die Eingabevorrichtung und/oder die Ausgabevorrichtung dann in einer dem Benutzer des Ortungsgeräts bei dessen Benutzung zugewandten Gehäuseseite angeordnet. Eine Gehäuseseite meint insbesondere eine das Ortungsgerät zu seiner Umgebung hin begrenzende Außenwand des Gehäuses. Unter "in einer Gehäuseseite angeordnet" soll verstanden werden, dass die Eingabevorrichtung und/oder die Ausgabevorrichtung auf der Gehäuseseite in deren Oberfläche eingesetzt, aufgebracht oder anderweitig befestigt sind/ist. Insbesondere kann das Gehäuse auch selbst Bestandteil der Eingabe- bzw. Ausgabevorrichtung sein. Alternativ oder zusätzlich kann die Eingabe- und/oder Ausgabevorrichtung auch ausgelagert werden und beispielsweise über externe Vorrichtungen realisiert werden. Letztere Realisierungsmöglichkeit umfasst explizit die Steuerung, Auswertung und Ausgabe von Ortungsergebnissen über drahtgebundene und/oder drahtlose externe Systeme wie beispielsweise Fernbedienungen, Computersteuerungen, Tablet-PCs und/oder andere mobile Geräte wie Mobiltelefone, Smartphones etc.

In einer bevorzugten Ausführungsform des erfindungsgemäßen Ortungsgeräts weist das Ortungsgerät zumindest eine erste Anzeigevorrichtung auf, die dazu vorgesehen ist, zumindest eine Handlungsanweisung, insbesondere die zumindest eine Trajektorie, darzustellen.

In einer bevorzugten Ausführungsform des erfindungsgemäßen Ortungsgeräts weist das Ortungsgerät zumindest eine zweite Anzeigevorrichtung auf, die dazu vorgesehen ist, zumindest die zumindest zweidimensionale Karteninformation als Karte darzustellen.

Es sei angemerkt, dass die erste Anzeigevorrichtung und die zweite Anzeigevorrichtung bevorzugt auch als dieselbe Anzeigevorrichtung ausgeführt sein können.

In einer bevorzugten Ausführungsform des erfindungsgemäßen Ortungsgeräts weist das Ortungsgerät zumindest eine Signalausgabevorrichtung auf, die dazu vorgesehen ist, Richtungsindikatoren optisch, akustisch und/oder taktil auszugeben.

Bevorzugt können Richtungsindikatoren mittels einer Signalausgabevorrichtung an den Benutzer des Ortungsgeräts ausgegeben werden. Unter einer Signalausgabevorrichtung ist dabei eine beliebige, dem Fachmann sinnvoll erscheinende Ausgabevorrichtung zu verstehen, die dazu vorgesehen ist, die Richtungsindikatoren, insbesondere die Pfeile, optisch, akustisch und/oder taktil an den Benutzer auszugeben. Beispielsweise kann es sich bei einer Signalausgabevorrichtung um LED-Anzeigeelemente und/oder beleuchtete Pfeile und/oder Lautsprecher und/oder einen Vibrationsgeber und/oder um eine Projektionseinheit oder dergleichen handeln. In einer bevorzugten Ausführungsform des Ortungsgeräts kann die Signalausgabevorrichtung als vier LED-Anzeigeelemente realisiert sein, die auf der einem Benutzer bei Anwendung des Ortungsgeräts zugewandten Seite des Ortungsgeräts unmittelbar an den Mitten der vier Kanten liegend angeordnet sind. Mittels dieser LED-Anzeigeelemente können insbesondere Richtungsindikatoren durch Aufleuchten eines entsprechenden LED-Anzeigeelements ausgegeben werden, die die Richtung signalisieren, in die das Ortungsgerät umpositioniert werden muss, um zu der entsprechenden Messposition zu gelangen.

Ferner ist in einer vorteilhaften Ausführungsform des erfindungsgemäßen Ortungsgeräts zumindest eine Speichervorrichtung zum Speichern von Messergebnissen, insbesondere Ortungsergebnissen, und/oder Ortungsdaten und/oder Positionsdaten und/oder zumindest zweidimensionalen Karteninformationen und/oder Arbeitsparametern vorgesehen. Unter einer Speichervorrichtung soll insbesondere ein elektronischer Datenspeicher umfassend die zu dessen Ansteuerung benötigten Mittel verstanden werden. Die Speichervorrichtung ist zur Ablage und zum Abruf von Messergebnissen und/oder Ortungsinformationen und/oder Arbeitsparameter und/oder anderen im Rahmen des Betriebs des Ortungsgeräts benötigten oder sinnvollen Daten vorgesehen. Insbesondere ist die Speichervorrichtung vorgesehen, Ortungsdaten und/oder ausgewertete Ortungsinformationen, bevorzugt zumindest zweidimensionale Karteninformationen, zumindest vorübergehend zu speichern und/oder abzurufen. Grundsätzlich ist auch denkbar, dass die Speichervorrichtung zur Ablage und zum Abruf von Datenkomponenten vorgesehen ist.

Bevorzugt ist die Speichervorrichtung als ein von der Auswertevorrichtung und/oder der Steuervorrichtung beschreibbarer und auslesbarer Speicher ausgebildet. Die Speichervorrichtung kann alle Formen an externen und internen elektronischen, insbesondere digitalen Speichern, umfassen, beispielsweise einen RAM-Baustein oder integrierte Schaltkreise. Alternativ oder zusätzlich kann die Speichervorrichtung insbesondere auch vorgesehen sein, wechselbare Speichermedien wie Speicherchips, USB-Sticks, Memory-Sticks, Speicherkarten, SD-Karten oder dergleichen zu beschreiben und zu lesen. In einer bevorzugten Ausgestaltung kann die Speichervorrichtung in der Auswertevorrichtung und/oder in der Steuervorrichtung und/oder in der Eingabevorrichtung und/oder in der Ausgabevorrichtung und/oder in einer Datenkommunikationsschnittstelle integriert sein, d.h. beispielsweise als ein Teil eines Speichers der Auswertevorrichtung ausgebildet sein.

In einer vorteilhaften Ausführungsform des erfindungsgemäßen Ortungsgeräts ist eine Datenkommunikationsschnittstelle zur insbesondere drahtlosen Kommunikation vorgesehen, mittels der das Ortungsgerät Daten austauschen kann, insbesondere Messergebnisse, insbesondere Ortungsergebnisse, und/oder Ortungsdaten und/oder Positionsdaten und/oder zumindest zweidimensionale Karteninformationen und/oder Arbeitsparameter senden und/oder empfangen kann. Die Datenkommunikationsschnittstelle ist signaltechnisch zumindest an die Steuervorrichtung und/oder die Auswertevorrichtung des Ortungsgeräts angebunden. Bevorzugt verwendet die Datenkommunikationsschnittstelle ein standardisiertes Kommunikationsprotokoll zu einer Übertragung von elektronischen, insbesondere digitalen Daten. Vorteilhaft umfasst die Datenkommunikationsschnittstelle eine drahtlose Schnittstelle, insbesondere beispielsweise eine WLAN-, Bluetooth-, Infrarot-, NFC-, RFID-Schnittstelle oder eine andere, einem Fachmann als sinnvoll erscheinende, drahtlose Schnittstelle. Alternativ oder zusätzlich kann die Datenkommunikationsschnittstelle auch einen Adapter zu einer kabelgebundenen Datenübertagung aufweisen, beispielsweise einen USB- oder Mikro-USB-Adapter.

Vorteilhaft können mittels der Datenkommunikationsschnittstelle Messergebnisse, insbesondere Ortungsergebnisse, und/oder Ortungsdaten und/oder Positionsdaten und/oder zumindest zweidimensionale Karteninformationen und/oder Arbeitsparameter von dem Ortungsgerät an ein externes Datengerät, beispielsweise an ein Smartphone, einen Tablet-PC, einen PC, einen Drucker oder weitere einem Fachmann als sinnvoll erscheinende externe Geräte gesendet werden oder von diesen empfangen werden. Mittels der erfindungsgemäßen Ausgestaltung kann vorteilhaft eine Übertragung von Daten ermöglicht werden, die zu einer weiteren Auswertung von mit dem Ortungsgerät erfassten Messsignalen und/oder zumindest zweidimensionalen Karteninformationen nutzbar ist. Ferner können vorteilhaft vielfältige Zusatzfunktionen ermöglicht und eingebunden werden, die insbesondere auch eine direkte Kommunikation mit Smartphones (insbesondere über programmierte Apps) oder ähnlichen portablen Datengeräten erfordern. Diese können beispielsweise automatische Auswerte-Funktionen, Firmware-Updates, Datennachbearbeitung, Datenaufbereitung, Datenabgleich mit anderen Geräten, oder dergleichen umfassen.

### Zeichnungen

Die Erfindung ist anhand von in den Zeichnungen dargestellten Ausführungsbeispielen in der nachfolgenden Beschreibung näher erläutert. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen. Gleiche Bezugszeichen in den Figuren bezeichnen gleiche Elemente.

Es zeigen:
- Figur 1: eine perspektivische Seitenansicht einer Ausgestaltung eines erfindungsgemäßen Ortungsgeräts,
- Figur 2: eine Aufsicht auf dieselbe Ausgestaltung des erfindungsgemäßen Ortungsgeräts,
- Figur 3: eine schematische Seitenansicht einer Ausgestaltung eines erfindungsgemäßen Ortungsgeräts,
- Figur 4: eine schematische Darstellung einer Ausführungsform eines erfindungsgemäßen Verfahrens in einem Verfahrensdiagramm,
- Figur 5: eine schematische Darstellung einer Ausführungsform des Ortungsgeräts während seiner Anwendung an einem zu untersuchenden Gegenstand,
- Figur 6: eine schematische Veranschaulichung zu einer Ausführungsform der Zielfunktion
- Figur 7: eine schematische Veranschaulichung zu einer alternativen Ausführungsform der Zielfunktion

### Beschreibung der Ausführungsbeispiele

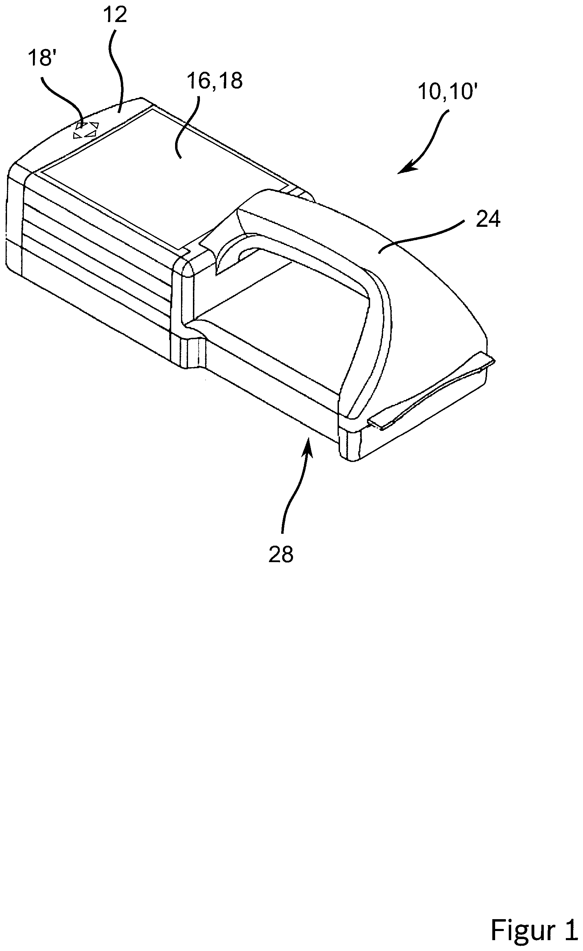

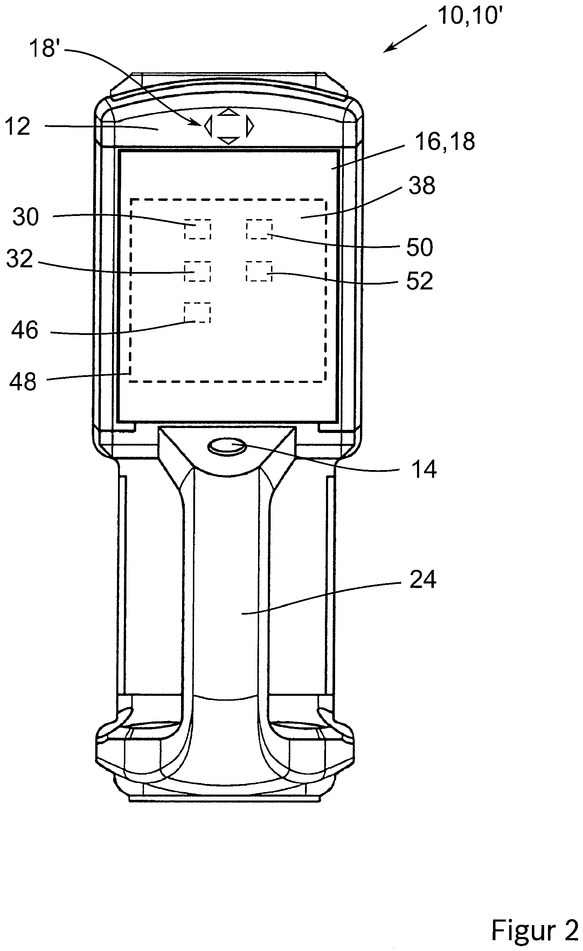

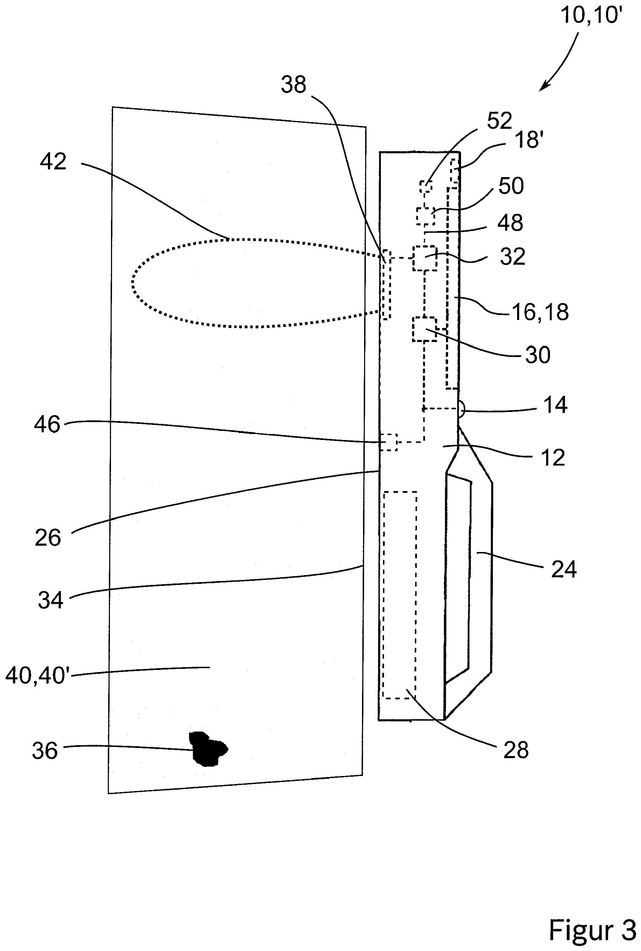

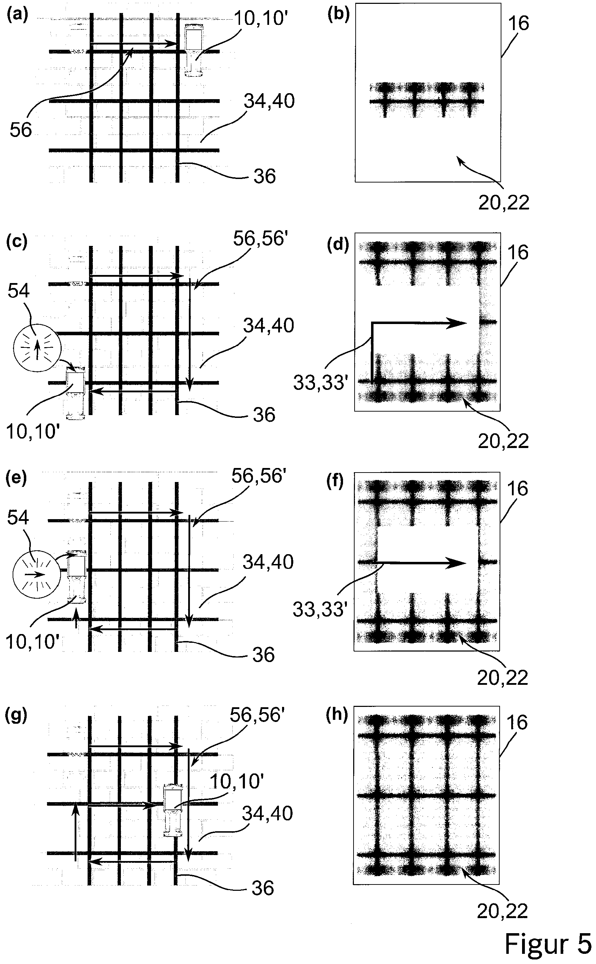

Figur 1 und Figur 2 zeigen zwei Ansichten einer beispielhaften Ausführungsform eines erfindungsgemäßen bildgebenden Ortungsgeräts 10 in perspektivischer Darstellung bzw. in vereinfachter, schematischer Aufsicht. In Figur 3 ist die erfindungsgemäße Ausführungsform des Ortungsgeräts 10 in einer vereinfachten schematischen Seitenansicht dargestellt. Das dargestellte Ortungsgerät 10 ist als ein handgehaltenes Ortungsgerät 10' realisiert. Das beispielhaft ausgeführte Ortungsgerät 10 weist ein Gehäuse 12, eine Eingabevorrichtung in Form von Betätigungselementen 14, geeignet zum Ein- und Ausschalten des Ortungsgeräts 10, sowie eines berührungssensitiven Anzeigeelements 16 zum Starten und Konfigurieren eines Messvorgangs und zum Eingeben von Arbeitsparametern auf. Das berührungssensitive Anzeigeelement 16 ist Teil einer Anzeigevorrichtung 18, die ferner der Darstellung und Ausgabe von Arbeitsparametern und/oder Auswerteergebnissen, insbesondere einer zumindest zweidimensionalen Karteninformation 20 in Form einer Karte 22, insbesondere in Form einer zumindest zweidimensionalen Karte 22, dient (vgl. insbesondere Figur 5).

Das Ortungsgerät 10 verfügt zum Transport und zu dessen Führung über einen Handgriff 24. Der Handgriff 24, die Betätigungselemente 14 sowie das Anzeigeelement 16 befinden sich auf einer Gehäuseseite des Ortungsgeräts 10, die bei einer Bedienung des Ortungsgeräts 10 typischerweise dem Benutzer zugewandt ist.

Zur Energieversorgung des Ortungsgeräts 10 weist das Ortungsgerät 10 auf der Geräterückseite 26, d.h. der das Anzeigeelement 16 aufnehmenden Geräteseite geräterückseitig gegenüberliegenden Geräteseite, eine Aussparung auf, die zur Aufnahme zumindest eines stromnetzunabhängigen Energiespeichers 28, insbesondere Batterien oder wiederaufladbaren Akkus, vorgesehen ist. Das beispielhaft vorgestellte Ortungsgerät 10 besitzt Lithium-Ionen-Akkus, deren hohe Energie- und Leistungsdichte vorteilhaft zur Energieversorgung des Ortungsgeräts 10 geeignet ist. In einer alternativen Ausführungsform kann der Energiespeicher 28 auch im Handgriff 24 des Ortungsgeräts 10 untergebracht sein. Vorzugsweise weist der Energiespeicher 28 eine lösbare Formschluss- und/oder Kraftschlussverbindungsschnittstelle auf, sodass der zumindest eine Energiespeicher 28 abnehmbar und austauschbar an oder in dem Ortungsgerät 10 anordenbar ist. Darüber hinaus lässt sich der Energiespeicher 28 in und/oder außerhalb des Ortungsgeräts 10 mit Energie aus einem Stromnetz versorgen und laden.

Die Eingabevorrichtung, bestehend aus Betätigungselementen 14 sowie dem berührungssensitiven Anzeigeelement 16, dient der Eingabe von für den Betrieb des Ortungsgeräts 10 nötigen und/oder sinnvollen Arbeitsparametern durch einen Benutzer des Ortungsgeräts 10. Die Komponenten der Eingabevorrichtung sind zur Übermittlung von Benutzereingaben mit einer Auswertevorrichtung 30 und/oder einer Steuervorrichtung 32 verbunden. Die Auswertevorrichtung 30 und/oder die Steuervorrichtung 32 sind/ist dazu vorgesehen, die Benutzereingaben auszuwerten und insbesondere Parameter zur Steuerung des Ortungsgeräts 10 und/oder zur Erzeugung und Modifikation einer die Ortung betreffenden Information, insbesondere einer zumindest zweidimensionalen Karteninformation 20, anzupassen. Beispielsweise lässt sich über eine Benutzereingabe das Ortungsgerät 10 und/oder ein Ortungsvorgang starten, eine Farbskala und/oder ein Abbildungsmaßstab einer mittels der Anzeigevorrichtung 18 dargestellten Karte 22 anpassen, eine mittels der Anzeigevorrichtung 18 in Form einer Karte 22 dargestellte zumindest zweidimensionale Karteninformationen 20 modifizieren, oder dergleichen.

Die Anzeigevorrichtung 18 ist dazu vorgesehen, eine Ortungsinformation darzustellen, insbesondere zumindest einen Ausschnitt einer zweidimensionalen Karteninformation 20 als eine Karte 22 darzustellen, vorzugsweise maßstäblich darzustellen. Die Anzeigevorrichtung 18 ist prinzipiell auch dazu vorgesehen, in einem Betriebszustand eine gesamte zweidimensionale Karte 22 anzuzeigen. Die Anzeigevorrichtung 18 ist mit der Auswertevorrichtung 30 zur Übermittlung von zumindest einer zweidimensionalen Karteninformation 20 sowie zur Übermittlung einer an einen Benutzer des Ortungsgeräts 10 auszugebenden Handlungsanweisung verbunden. Die zumindest zweidimensionale Karteninformation 20 wird insbesondere in Form von mehrdimensionalen Matrizen oder dergleichen von der Auswertevorrichtung 30 zur Verfügung gestellt und von der Anzeigevorrichtung 18 zur Darstellung in Form einer Karte 22 oder zumindest eines Ausschnitts einer Karte 22 angepasst und/oder umgewandelt. Die Anzeigevorrichtung 18 ist dazu vorgesehen, die zumindest zweidimensionale Karteninformationen 20 in ein Darstellungsattribut zur bildhalten Wiedergabe umzusetzen, wie beispielsweise in eine Grauwertstufe, einen Grauwert eines Grauwerteverlaufs, eine Farbwertstufe, einen Farbwert eines Farbverlaufs, eine Helligkeitsstufe, einen Helligkeitswert eines Helligkeitsverlaufs, eine Sättigungsstufe oder einen Sättigungswert eines Sättigungsverlaufs und/oder ein Muster und/oder ein Symbol. Die Anzeigevorrichtung 18 weist ein Anzeigeelement 16 zur Anzeige der Karte 22 sowie einer Handlungsinformation, insbesondere einer Trajektorie 33 auf. In dem vorliegenden Ausführungsbeispiel ist das Anzeigeelement 16 als ein farbfähiges OLED-Display ausgebildet. Die Anzeigevorrichtung 18, insbesondere das Anzeigeelement 16, ist als ein Teil des Ortungsgeräts 10 ausgebildet und in das Gehäuse 12 des Ortungsgeräts 10 integriert. Grundsätzlich ist es auch denkbar, dass die Anzeigevorrichtung 18, insbesondere das Anzeigeelement 16, getrennt von dem Ortungsgerät 10 ausgebildet ist und über eine drahtlose Verbindung zu einer Übermittlung von Ausgabewerten und einer Handlungsanweisung verbunden ist, beispielsweise über eine Punkt-zu-Punkt ad-hoc Verbindung, eine WLAN-Verbindung, eine Bluetooth-Verbindung oder dergleichen.

Ferner weist das Ortungsgerät 10 eine Signalausgabevorrichtung 18' auf, die getrennt von dem Anzeigeelement 16 der Anzeigevorrichtung 18 ausgebildet ist. Die Signalausgabevorrichtung 18' umfasst vier LED-Anzeigeelemente in Form einer Pfeilspitze, die auf der einem Benutzer bei Anwendung des Ortungsgeräts 10 zugewandten Seite des Ortungsgeräts 10 unmittelbar neben, insbesondere oberhalb, des Anzeigeelements 16 angeordnet sind. Mittels dieser LED-Anzeigeelemente der Signalausgabevorrichtung 18' können insbesondere Richtungsindikatoren 54 durch Aufleuchten eines oder mehrerer entsprechender LED-Anzeigeelemente ausgegeben werden, die die Richtung signalisieren, in die das Ortungsgerät 10 umpositioniert werden muss, um zu einer von dem Ortungsgerät 10 empfohlenen Messposition 44 zu gelangen. In einem alternativen oder zusätzlichen Ausführungsbeispiel kann die Signalausgabevorrichtung 18' auch dazu vorgesehen sein, Richtungsindikatoren 54 akustisch und/oder taktil auszugeben.

Vorteilhaft lassen sich mittels der Anzeigevorrichtung 18 des Ortungsgeräts 10 eine Handlungsanweisung zum Führen des Ortungsgeräts 10 darstellen. In einem bevorzugten Ausführungsbeispiel ist die Handlungsanweisung in Form zumindest einer Trajektorie 33 realisiert, die mittels der Anzeigevorrichtung 18, insbesondere des Anzeigeelements 16, dargestellt wird (vgl. insbesondere Figur 5d,5f). Dazu kann die Anzeigevorrichtung 18 die zumindest eine Trajektorie 33 und eine anzuzeigende zumindest zweidimensionale Karteninformation 20, insbesondere deren Darstellung als eine Karte 22, derart überlagern, dass sowohl die zumindest eine Trajektorie 33 als auch die zumindest zweidimensionale Karteninformation 20, insbesondere die Karte 22, gleichzeitig dargestellt und an den Benutzer des Ortungsgeräts 10 ausgegeben werden (vgl. insbesondere Figur 5d,5f). Der von der Anzeigevorrichtung 18, insbesondere dem Anzeigeelement 16, angezeigte Ausschnitt der Karte 22 weist einen Abbildungsmaßstab auf, der einem Verhältnis von Erstreckungen der Karte 22 im Anzeigeelement 16 zu Erstreckungen eines zugeordneten Bereichs einer Untersuchungsoberfläche 34 entspricht (vgl. insbesondere Figur 3 und Figur 5b,5d,5f,5h). Der Abbildungsmaßstab weist einen gleichen Abbildungsmaßstab für eine erste Richtung und für eine zweite, insbesondere zur ersten Richtung orthogonale Richtung auf. Die Anzeige der zumindest zweidimensionalen Karte 22 sowie der zumindest einen Trajektorie 33 ist insbesondere unabhängig von der Orientierung des Ortungsgeräts 10 auf der Untersuchungsoberfläche 34. Somit stellt die dargestellte Karte 22 unabhängig von der Orientierung des Ortungsgeräts 10 unter der Untersuchungsoberfläche 34 geortete Ortungsobjekte 36 lagegetreu dar. Bevorzugt wird die dargestellte Karte 22 sowie die zumindest eine Trajektorie 33 bei einer Drehung des Ortungsgeräts 10 entgegen der Richtung der Drehbewegung rotiert, sodass die dargestellte Karte 22 sowie die zumindest eine Trajektorie 33 auch unter Drehung des Ortungsgeräts 10 die unter der Untersuchungsoberfläche 34 georteten Ortungsobjekte 36 lagegetreu wiedergibt.

Die Anzeigevorrichtung 18 ist ferner zur Ausgabe oder Darstellung weiterer notwendiger, nützlicher und/oder sinnvoller Informationen vorgesehen, beispielsweise zur Ausgabe einer Ortungsrichtung, einer Ortungsgenauigkeit, einer konventionellen Bedienungsanleitung, eines Betriebsmenüs oder dergleichen. Die Anzeigevorrichtung 18 ermöglicht es ferner, eine zumindest zweidimensionale Karteninformation 20 als synthetische Elemente aufweisende Karte 22 darzustellen. Derartige synthetische Elemente stellen beispielsweise neben der Trajektorie 33 ferner Linien, Kästen, anderweitige geometrische Formen, Muster, Symbole oder dergleichen dar.

Das Ortungsgerät 10 weist eine Ortungsvorrichtung 38 auf, wobei die Ortungsvorrichtung 38 vorgesehen ist, Ortungsdaten zu unter einer Untersuchungsoberfläche 34 verborgenen Ortungsobjekten 36 zu erfassen. Die Ortungsvorrichtung 38 ist in dem Gehäuse 12 des Ortungsgeräts 10 untergebracht, sodass die Ortungsvorrichtung 38 in einem montierten Zustand des Ortungsgeräts 10 durch das Gehäuse 12 gehalten und geschützt ist. In dem gezeigten Ausführungsbeispiel ist die Ortungsvorrichtung 38 als eine Sende- und Empfangseinheit für elektromagnetische Strahlung, insbesondere als eine nicht näher dargestellte LCR-Antenne, ausgebildet. Die LCR-Antenne ist zur Abstrahlung von elektromagnetischer Strahlung auf der einem Benutzer des Ortungsgeräts 10 abgewandten Geräterückseite 26 vorgesehen. Dazu umfasst die Ortungsvorrichtung 38 zumindest ein nicht näher dargestelltes Antennenelement sowie eine ebenfalls nicht näher dargestellte Antennensteuerung zur Ansteuerung der LCR-Antenne. Wie in Figur 3 im schematischen Schnitt dargestellt, sendet die Ortungsvorrichtung 38, insbesondere die LCR-Antenne, in das zu untersuchende Werkstück 40 eindringende elektromagnetische Signale auf der Geräterückseite 26 aus, dargestellt in Form eines Erfassungsbereichs 42 (Empfangskeule). Im Inneren des Werkstücks 40 reflektierte und/oder gestreute Signale, insbesondere von einem unter der Untersuchungsoberfläche 34 verborgenen Ortungsobjekt 36 zumindest teilweise reflektierte elektromagnetische Strahlung, wird mittels der Antenne der Ortungsvorrichtung 38 detektiert. Dabei werden elektromagnetische Eigenschaften des unter der Untersuchungsoberfläche 34 angeordneten Volumens zumindest in dem Erfassungsbereich 42 der Ortungsvorrichtung 38 erfasst. Mittels der reflektierten elektromagnetischen Strahlung erfasste elektromagnetische Eigenschaften betreffen insbesondere eine elektrische oder magnetische Leitfähigkeit oder eine elektrische oder magnetische Suszeptibilität der unter der Untersuchungsoberfläche 34 verborgenen Ortungsobjekte 36. Die Ortungsvorrichtung 38 ist unmittelbar hinter der dem Benutzer bei Anwendung des Ortungsgeräts 10 abgewandten Gehäuseseite im Innern des Gehäuses 12 angeordnet. Auf diese Weise kann die Ortungsvorrichtung 38 bei Anwendung des Ortungsgeräts 10, insbesondere bei einem Aufsetzen des Ortungsgeräts 10 auf einer zu untersuchenden Untersuchungsoberfläche 34, vorteilhaft nahe an der Untersuchungsoberfläche 34 positioniert werden. Durch ein Aussenden und ein Empfangen eines Ortungssignals der Ortungsvorrichtung 38 bestimmt die Ortungsvorrichtung 38 Ortungsdaten betreffend die Existenz und laterale Position des Ortungsobjekts 36, bevorzugt auch betreffend eine Distanz zwischen der LCR-Antenne und einem Ortungsobjekt 36. Aus diesen Ortungsdaten können in Folge einer Zuordnung von Ortungsdaten zu Positionsdaten des Ortungsgeräts 10 bezogen auf die Untersuchungsoberfläche 34 durch die Auswertevorrichtung 30 die zumindest zweidimensionale Karteninformation 20 (vgl. insbesondere Figur 5b,5d,5f,5h) bestimmt werden. Beispielsweise lassen sich unter Verwendung der Ortungsvorrichtung 38 Ortungsobjekte wie Armierungsstäbe, metallische Einschlüsse oder dergleichen in einem zu untersuchenden Werkstück 40, insbesondere einer zu untersuchenden Wand 40', orten.

Es sei angemerkt, dass die Erfindung nicht auf die Verwendung einer LCR-Antenne beschränkt ist. Prinzipiell kann das Ortungsgerät 10 zur Ortung der unter einer Untersuchungsoberfläche 34 verborgenen Ortungsobjekte 36 auch mit anderen, insbesondere auf anderen Messverfahren basierenden, Ortungsvorrichtungen 38, beispielsweise einer einen Induktivsensor, einen Kapazitivsensor, einen Mikrowellensensor, einen Terahertzsensor, einen Ultrahochfrequenzsensor, einen Röntgensensor, einen Infrarotsensor, einen NMR-Sensor, oder dergleichen aufweisenden Ortungsvorrichtung 38 realisiert sein.

Das Ortungsgerät 10 umfasst des Weiteren einen Positionssensor 46, der dazu vorgesehen ist, Positionsdaten des Ortungsgeräts 10 bezogen auf die Untersuchungsoberfläche 34 zu erfassen. Der Positionssensor 46 ist in einem montierten Zustand des Ortungsgeräts 10 in der Gehäusewand auf der Geräterückseite 26 aufgenommen. Mittels des Positionssensors 46 kann das Ortungsgerät 10 eine Ausrichtungsänderung und/oder eine Positionsänderung des Ortungsgeräts 10 bezogen auf die Untersuchungsoberfläche 34 eines zu untersuchenden Werkstücks 40 detektieren (vgl. insbesondere Figur 3). Der Positionssensor 46 erfasst insbesondere eine Bewegung des Ortungsgeräts 10 sowie eine zurückgelegte Distanz und/oder Richtung und erlaubt somit Ortungsdaten in Bezug zu einer Position des Ortungsgeräts 10, insbesondere bezogen auf die Untersuchungsoberfläche 34, zu setzen. Insbesondere erlaubt der Positionssensor 46 darüber hinaus, eine Rotation des Ortungsgeräts 10 um eine Achse, die bezogen auf die Untersuchungsoberfläche 34 senkrecht verläuft, zu detektieren. In dem dargestellten Ausführungsbeispiel ist der Positionssensor 46 als ein optischer Wegaufnehmer ausgebildet, der in der bei Anwendung des Ortungsgeräts 10 dem zu untersuchenden Werkstück 40 zugewandten Gehäusewand der Geräterückseite 26 angeordnet ist.

Wie in Figur 3 dargestellt ist, wird das Ortungsgerät 10 zur Durchführung einer Ortung eines unter einer Untersuchungsoberfläche 34 verborgenen Ortungsobjekts 36 mit der Geräterückseite 26 flächig in unmittelbarer Nähe zu der Untersuchungsoberfläche 34, insbesondere in Berührung zu der Untersuchungsoberfläche 34, positioniert. Das Ortungsgerät 10 ist dabei dazu vorgesehen, von Hand an und/oder über die Untersuchungsoberfläche 34 geführt zu werden. Dabei wird das Ortungsgerät 10 mit der Geräterückseite 26 in unmittelbarer Nähe an die zu untersuchende Untersuchungsoberfläche 34 derart positioniert, dass der Abstand zwischen der Geräterückseite 26 und der Untersuchungsoberfläche 34 minimiert ist. Auf diese Weise wird erreicht, dass der Erfassungsbereich 42 der Ortungsvorrichtung 38 in das zu untersuchende Werkstück 40 eindringen kann. In Folge eines Umpositionierens, insbesondere Verfahrens oder Verschiebens des Ortungsgeräts 10 auf dem Werkstück 40, wird eine Positionsänderung des Ortungsgeräts 10 detektiert. Entsprechende Positionsdaten werden zur weiteren Auswertung an die Auswertevorrichtung 30 weitergegeben. Besonders vorteilhaft lässt sich mittels positionsabhängiger Vermessung und Auswertung einer Untersuchungsoberfläche 34 eine mehrdimensionale, insbesondere zumindest zweidimensionale Karteninformation 20 und/oder eine bildhafte Repräsentationen der zumindest zweidimensionalen Karteninformationen 20 in Form einer Karte 22 erzeugen.

Auf einem Trägerelement 48 des Ortungsgeräts 10, insbesondere einer Systemplatine oder einer Leiterplatte innerhalb des Gehäuses 12, sind weitere Komponenten des Ortungsgeräts 10, insbesondere die Ortungsvorrichtung 38, die Steuervorrichtung 32, die Auswertevorrichtung 30 sowie eine mit der Steuervorrichtung 32 und/oder der Auswertevorrichtung 30 verbundene Datenkommunikationsschnittstelle 50 und eine Speichervorrichtung 52 untergebracht (siehe insbesondere Figur 2 und Figur 3).

Die Steuervorrichtung 32 weist eine Steuerelektronik umfassend Mittel zur Kommunikation mit den anderen Komponenten des Ortungsgeräts 10 auf, beispielsweise Mittel zur Steuerung und/oder Regelung der Ortungsvorrichtung 38 sowie Mittel zur Steuerung des Ortungsgeräts 10. Die Steuervorrichtung 32 umfasst insbesondere eine nicht näher dargestellte Einheit mit einer Prozessoreinheit, einer Speichereinheit und einem in der Speichereinheit gespeicherten Betriebsprogramm.

Die Auswertevorrichtung 30 ist mit der Ortungsvorrichtung 38 zur Übermittlung von Ortungsdaten sowie mit dem Positionssensor 46 zur Übermittlung von Positionsdaten verbunden. Die Auswertevorrichtung 30 weist zumindest einen Prozessor und einen nicht näher dargestellten Speicher mit einem darauf gespeicherten und ausführbaren Betriebsprogramm auf. Ferner ist die Auswertevorrichtung 30 mit der Datenkommunikationsschnittstelle 50 und der Anzeigevorrichtung 18, insbesondere dem Anzeigeelement 16, signaltechnisch verbunden. Die Auswertevorrichtung 30 ist dazu vorgesehen, durch Zuordnung von Ortungsdaten der Ortungsvorrichtung 38 zu Positionsdaten des Positionssensors 46 eine zumindest zweidimensionale Karteninformation 20 zu bestimmen. Die zumindest zweidimensionale Karteninformation 20 betrifft zumindest eine positionsaufgelöste Information über die Existenz von Ortungsobjekten unter einer Untersuchungsoberfläche 34 (vgl. insbesondere Figur 5b,5d,5f,5h). Die Auswertevorrichtung 30 weist ferner Auswerteroutinen zur Aufbereitung und/oder Analyse von Ortungsdaten und/oder Positionsdaten auf, insbesondere Regelroutinen, Steuerroutinen, Analyseroutinen, Berechnungsroutinen, Zuordenroutinen, Umrechnungsroutinen, statistische Auswerteroutinen, Filter oder dergleichen. Die Auswertevorrichtung ist insbesondere dazu vorgesehen, für einen Teil der Bereiche einer zweidimensionalen Karteninformation, für die (bislang) keine Ortungsdaten durch Ortung verfügbar sind, mittels Inter- oder Extrapolationsroutinen Ortungsdaten zu ermitteln. Dazu werden vorzugsweise Ortungsdaten von Bereichen der zumindest zweidimensionale Karteninformation in einer Umgebung des Bereichs ohne Ortungsdaten zur Berechnung inter- oder extrapolierter Ortungsdaten für den Bereich ohne Ortungsdaten genutzt. Auswerteergebnisse, insbesondere eine aus den Ortungsdaten und Positionsdaten abgeleitete zumindest zweidimensionale Karteninformation 20 sowie zumindest eine Handlungsanweisung, werden von der Auswertevorrichtung 30 zur weiteren Verarbeitung über die Steuervorrichtung 32 entweder an die Speichervorrichtung 52 oder zur Versendung der Daten an die Datenkommunikationsschnittstelle 50 oder direkt an einen Benutzer des Ortungsgeräts 10 ausgegeben. Eine Ausgabe an einen Benutzer erfolgt dabei mittels der Anzeigevorrichtung 18, d.h. beispielsweise durch Darstellung der zumindest zweidimensionalen Karteninformation 20 in Form einer Karte 22 auf dem Anzeigeelement 16. Die Ausgabe auf dem Anzeigeelement 16 erfolgt bevorzugt grafisch, numerisch und/oder alphanumerisch, beispielsweise in Form eines Messwerts, einer Messkurve, eines Signalverlaufs, eines Zeitverlauf, als Bilddaten, in einer Gradientendarstellung, mittels Symbolik sowie in einer Kombination derer.

Des Weiteren weist die Auswertevorrichtung 30 zumindest mathematische Routinen auf, die im Rahmen einer mathematischen Optimierungsrechnung Anwendung finden, bevorzugt beispielsweise numerische Algorithmen, Funktionen oder dergleichen.

Die Auswertevorrichtung 30 und die Anzeigevorrichtung 18 sind dazu vorgesehen, durch eine hohe Verarbeitungsrate bzw. Darstellungsrate bei einem Benutzer des Ortungsgeräts 10 den Eindruck zu erwecken, dass Ortungsdaten für einen mit dem Ortungsgerät 10 überfahrenen Bereich unmittelbar, bevorzugt in Echtzeit, ausgewertet und als Karteninformation 20 bereitgestellt bzw. als Karte 22 dargestellt werden. Dazu beträgt die geräteinterne Verarbeitungsdauer durch die Auswertevorrichtung 30 und die Anzeigevorrichtung 18 weniger als 2 Sekunden, bevorzugt weniger als 1 Sekunde, besonders bevorzugt weniger als 0.5 Sekunden.

Die Auswertevorrichtung 30 ist zur Ausführung eines im Folgenden beschriebenen erfindungsgemäßen Verfahrens vorgesehen, bei dem aus mittels der Ortungsvorrichtung 38 des Ortungsgeräts 10 ermittelter Ortungsdaten und aus mittels des Positionssensor 46 des Ortungsgeräts 10 ermittelter Positionsdaten eine Handlungsanweisung zum Führen des Ortungsgeräts 10 abgeleitet wird, um einen optimierten Zugewinn an die Ortung betreffenden Karteninformationen 20 zu erhalten. Es handelt sich bei der Handlungsanweisung um eine Trajektorie 33, entlang derer das Ortungsgerät 10 zu führen ist, um einen optimierten Zugewinn an die Ortung betreffenden Karteninformationen 20 zu erhalten.

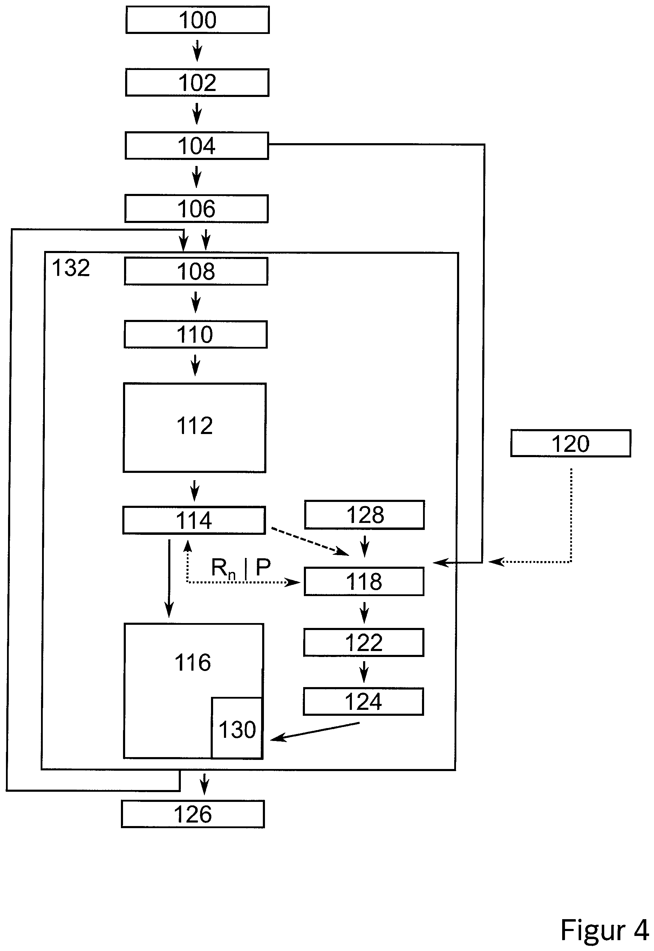

Im Folgenden wird anhand des in Figur 5 dargestellten exemplarischen Messszenarios sowie eines in Figur 4 dargestellten Verfahrensdiagramms zum Betrieb des Ortungsgeräts 10 die Funktionsweise, die Bedienung sowie das erfindungsgemäße Verfahren in einer beispielhaften Ausführungsform erläutert. Es sei darauf hingewiesen, dass das erfindungsgemäße Verfahren, bei dem durch die Auswertevorrichtung 30 aus mittels der Ortungsvorrichtung 38 des Ortungsgeräts 10 ermittelter Ortungsdaten und/oder aus mittels des Positionssensor 46 des Ortungsgeräts 10 ermittelter Positionsdaten und/oder aus Systemparametern des Ortungsgeräts 10 eine Handlungsanweisung zum Führen des Ortungsgeräts 10 abgeleitet wird, auch auf einige wenige Verfahrensschritte des im Folgenden beschriebenen, dem Betrieb des Ortungsgeräts 10 zu Grunde liegenden Verfahrens beschränkt sein kann.

Der Beschreibung liegt das in Figur 5 dargestellte Szenario zu Grunde, dass ein Benutzer des Ortungsgeräts 10 eine Gebäudewand 40' als Werkstück 40 auf verborgene Ortungsobjekte 36, insbesondere beispielsweise Armierungen, Rohre, elektrische Leitungen oder dergleichen, untersuchen möchte. Mit Einschalten des Ortungsgeräts 10 über ein Betätigungselement 14 führt das Ortungsgerät 10 zunächst eine Kalibrierung der funktionalen Komponenten des Ortungsgeräts 10 durch (Verfahrensschritt 100). Die Kalibrierung dient der Inbetriebnahme der funktionalen Komponenten des Ortungsgeräts 10, unter anderem dem Auslesen der internen Speichervorrichtung 52, dem Laden von Betriebsroutinen, der Initialisierung der Ortungsvorrichtung 38, der Auswertevorrichtung 30 sowie des Positionssensors 46. Bei dieser Inbetriebnahme befindet sich das Ortungsgerät 10 vorzugsweise in der Hand des Benutzers frei in der Luft, d.h. insbesondere ohne Kontakt zu einer Untersuchungsoberfläche 34. Anschließend ist das Ortungsgerät 10 einsatzbereit und befindet sich in einem Wartezustand. Der Benutzer des Ortungsgeräts 10 setzt das Ortungsgerät 10 mit der dafür vorgesehenen Geräterückseite 26 an einer beliebigen Stelle auf die zu untersuchende Untersuchungsoberfläche 34 der Wand 40' auf. Dabei drückt der Benutzer das Ortungsgerät 10 leicht derart gegen die Wand 40', dass ein unabsichtliches Verrutschen und/oder Verwackeln des Ortungsgeräts 10 auf der Wand 40' vermieden wird. Das Aufsetzen des Ortungsgeräts erfolgt in Verfahrensschritt 102.

Anschließend wählt das Ortungsgerät 10, optional auch der Benutzer des Ortungsgeräts 10 mittels manueller Eingabe, eine zur Durchführung des erfindungsgemäßen Verfahrens zu Grunde zu legende Zielfunktion aus. Unter Verwendung dieser Zielfunktion im Rahmen einer mathematischen Optimierung wird während des folgenden Verfahrens die Handlungsanweisung zum Führen des Ortungsgeräts 10 berechnet und abgeleitet. Insbesondere kann die zu optimierende Zielfunktion in erfindungsgemäßem Verfahren unterschiedlich gewählt und/oder unterschiedlich definiert sein. In einem Ausführungsbeispiel kann das Ortungsgerät 10, insbesondere dessen Auswertevorrichtung 30, oder optional der Benutzer des Ortungsgeräts 10, die Zielfunktion derart wählen, dass sie unter Berücksichtigung zumindest eines der folgenden Parameter definiert ist, der insbesondere betrifft:
- eine Verteilung der Positionsdaten des Ortungsgeräts 10;
- ein Signal-zu-Rauschverhältnis der Ortungsdaten an unterschiedlichen Positionen des Ortungsgeräts 10 bezogen auf die Untersuchungsoberfläche 34;
- eine α-priori Kenntnis über Eigenschaften verwendeter Auswerte- und/oder Interpolationsalgorithmen;
- eine Abweichung in der Korrelation benachbarter Ortungsdaten;
- eine α-priori und/oder während der Ortung erhaltene Kenntnis über Wahrscheinlichkeiten für Abweichungen zwischen einer erwarteten und einer tatsächlichen Position des Ortungsgeräts 10 bezogen auf die Untersuchungsoberfläche 34.

Die Auswahl der dem Optimierungsverfahren zu Grunde zu legenden Zielfunktion erfolgt in Verfahrensschritt 104. Diese Wahl kann jederzeit durch das Ortungsgerät 10, insbesondere dessen Auswertevorrichtung 30, optional auch durch den Benutzer des Ortungsgeräts 10, geändert werden. Dies ist mit Verfahrensschritt 120 angedeutet. Eine Änderung der Zielfunktion kann beispielsweise dann erfolgen, wenn eine berechnete Handlungsanweisung unter Verwendung einer ausgewählten Zielfunktion als nicht praktikabel und/oder ungenau angesehen werden. Anschließend bestätigt der Benutzer den Beginn eines Ortungsvorgangs mittels eines Betätigungselements 14, in Folge dessen die Ortungsvorrichtungen 38 sowie der Positionssensor 46 in Betrieb genommen werden. Fortan ist das Ortungsgerät 10 betriebsbereit und befindet sich in einem Leerlaufmodus (Verfahrensschritt 106).

Fortan kann der Benutzer das Ortungsgerät 10 über die Untersuchungsoberfläche 34 verfahren (Verfahrensschritt 108), wobei eine Umpositionierung des Ortungsgeräts 10 durch den Positionssensor 46 detektiert wird (Verfahrensschritt 110) und Positionsdaten an die Auswertevorrichtung 30 ausgegeben werden. Gleichzeitig führt die Ortungsvorrichtung 38 in deren Erfassungsbereich 42 eine Ortung durch (Verfahrensschritt 112), wobei Ortungsdaten ermittelt werden, die anschließend an die Auswertevorrichtung 30 weitergeleitet werden. Von der Auswertevorrichtung 30 werden die Ortungsdaten in Verfahrensschritt 114 weiterverarbeitet, d.h. es erfolgt zumindest eine Bestimmung einer zumindest zweidimensionalen Karteninformationen 20 durch Zuordnung von Ortungsdaten der Ortungsvorrichtung 38 zu Positionsdaten des Positionssensors 46. Ferner kann die Weiterverarbeitung auch eine Aufbereitung und/oder Analyse von Ortungsdaten, insbesondere mittels Regelroutinen, Steuerroutinen, Analyseroutinen, Berechnungsroutinen, Zuordenroutinen, Umrechnungsroutinen, statistische Auswerteroutinen, Filter, und dergleichen, umfassen. Bevorzugt führt die Auswertevorrichtung in Verfahrensschritt 114 eine Interpolation bereits vorhandener Ortungsdaten durch. Die auf diese Weise bestimmte zumindest zweidimensionale Karteninformation 20 wird anschließend an die Anzeigevorrichtung 18 weitergeleitet, von der sie zur Darstellung mittels des Anzeigeelements 16 in Form einer Karte 22 aufbereitet und anschließend an den Benutzer des Ortungsgeräts 10 ausgegeben wird (Verfahrensschritt 116).

Somit kann der Benutzer nach Aufsetzen des Ortungsgeräts 10 auf der Untersuchungsoberfläche 34 das Ortungsgerät 10 während des Betriebs entlang der Untersuchungsoberfläche 34 bewegen, insbesondere verschieben oder verfahren. Dies wird schematisch in den Figuren 5a,5c,5e,5g durch Pfeile angedeutet, die einen Pfad 56 einer Umpositionierung des Ortungsgeräts 10 andeuten. Dieser Pfad 56 kann in der in Figur 5c dargestellten Ausführungsform als Aneinanderreihung von senkrecht zueinander ausgerichteten Teilpfaden 56' entsprechen. Bezogen auf eine zu untersuchende Wand 40' können diese Teilpfade 56' beispielsweise horizontal und vertikal verlaufen. In einer bevorzugten, benutzerfreundlichen und besonders intuitiven Ausführungsform kann das Ortungsgerät 10 auch frei über die Untersuchungsoberfläche 34 bewegt werden (hier nicht näher dargestellt). Besonders vorteilhaft ist in dieser Ausführungsform eine Bewegung entlang eines vorgegebenen, insbesondere starren, Pfads nicht nötig. Somit kann der Benutzer in einer frei ausführbaren Wischbewegung das Ortungsgerät 10 über die Untersuchungsoberfläche 34 führen und die Untersuchungsoberfläche 34 auf einfache und intuitive Weise untersuchen. Die freie Wischbewegung des Ortungsgeräts 10 resultiert dann in einem freien, insbesondere beliebig ausgestalteten Pfad 56, der unabhängig ist von einem vorgegebenen Raster oder einer vorgegebenen Spur für die Bewegung oder den Verfahrweg. In Folge des Umpositionierens, insbesondere des Verfahrens oder Verschiebens des Ortungsgeräts 10 auf der Untersuchungsoberfläche 34, wird eine Positionsänderung des Ortungsgeräts 10 in Form von Positionsdaten zur weiteren Auswertung an die Auswertevorrichtung 30 weitergegeben. Mittels positionsabhängiger Vermessung und Auswertung von Ortungsdaten lassen sich, wie schematisch in den Figuren 5b,5d,5f,5h dargestellt, sukzessiv eine zumindest zweidimensionale Karteninformation 20 erzeugen. Bevorzugt wird die zumindest zweidimensionale Karteninformationen 20 in Form einer Karte 22 in Echtzeit, d.h. sukzessiv entsprechend der Umpositionierung des Ortungsgeräts 10 bezogen auf die Untersuchungsoberfläche 34, erzeugt und dargestellt (vgl. beispielsweise Veränderung der Karte zwischen Figur 5b bis 5h). Die Anzeigevorrichtung 18 ist dazu vorgesehen, den angezeigten Ausschnitt der Karte 22 und somit der angezeigten Karteninformation 20 in Abhängigkeit von Positionsdaten des Ortungsgeräts 10 bezogen auf die Untersuchungsoberfläche 34 zu variieren. Ferner ist die Anzeigevorrichtung 18 dazu vorgesehen, den angezeigten Ausschnitt der Karte 22 zu skalieren, insbesondere in Abhängigkeit von den Positionsdaten zu skalieren.

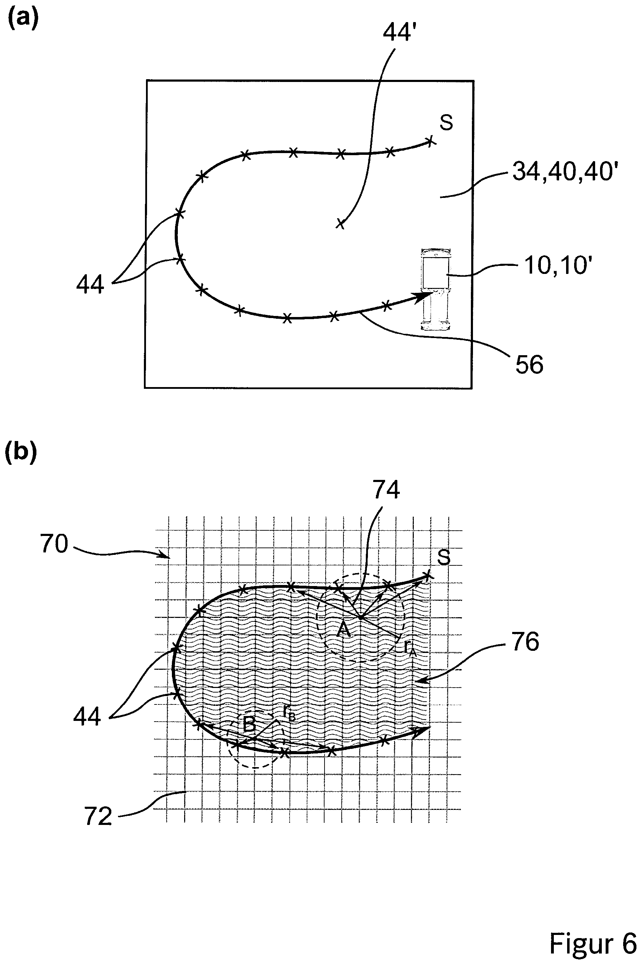

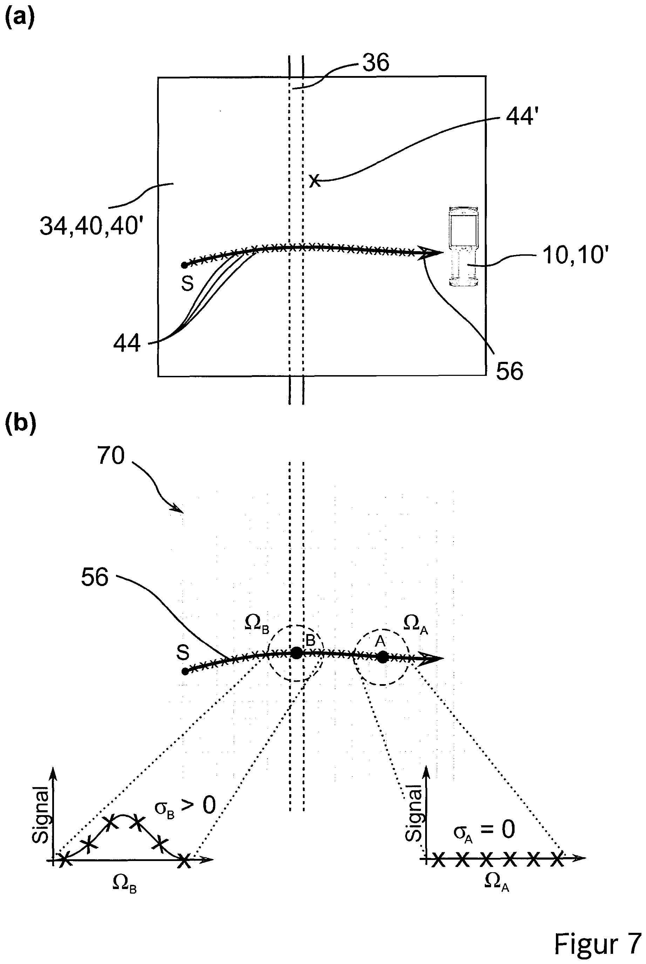

Zu einem bestimmten Zeitpunkt - entweder initiiert durch eine Benutzereingabe (dargestellt durch Verfahrensschritt 128) oder initiiert durch das Ortungsgerät 10, insbesondere dessen Auswertevorrichtung 30 (dargestellt durch den gestrichelten Pfeil zwischen den Verfahrensschritten 114 und 118) - beginnt die Auswertevorrichtung 30 mit der Erstellung der zu optimierenden Zielfunktion. Dazu greift die Auswertevorrichtung 30 in Verfahrensschritt 118 auf bereits vorhandene Ortungsdaten und/oder Positionsdaten, d.h. an Messpositionen Rₙ ermittelte Ortungsdaten und/oder Positionsdaten, und/oder Systemparameter P zurück (dargestellt durch den mit "Rₙ | P" benannten gestrichelten Pfeil), entsprechend der in Verfahrensschritt 104 und/oder 120 ausgewählten Zielfunktion (vgl. insbesondere Figuren 6 und 7). Die mit Randbedingungen (Nebenbedingungen) und Werten, insbesondere bereits zur Verfügung stehender Ortungsdaten und Positionsdaten, bestückte Zielfunktion wird in Verfahrensschritt 122 optimiert. Die Lösung der Optimierungsaufgabe liefert diejenigen empfohlenen Messpositionen Rₙ', deren Hinzunahme in einem Ortungsvorgang einen optimierten Zugewinn an die Ortung betreffenden Karteninformationen 20 ergibt. Anschließend wird in Verfahrensschritt 124 aus den durch Optimierung der Zielfunktion ermittelten empfohlenen Messpositionen Rₙ' durch Anwendung eines Traveling-Salesman-Algorithmus eine hinsichtlich einer Pfadlänge optimierte Trajektorie 33 berechnet, die insbesondere eine Reihenfolge anzusteuernder Messpositionen Rₙ' definiert. Diese Trajektorie 33 stellt eine Handlungsanweisung zum Führen des Ortungsgeräts 10 dar, um, sofern sie befolgt wird, einen optimierten Zugewinn an die Ortung betreffenden Karteninformationen 20 zu erhalten. Somit kann ein besonders schnell und effizient durchführbarer Ortungsvorgang situationsabhängig realisiert werden.

Die Trajektorie 33 wird anschließend mit der mit Verfahrensschritt 116 mittels der Anzeigevorrichtung 18 an den Benutzer des Ortungsgeräts 10 ausgegebenen Karte 22 überlagert, sodass fortan sowohl die Karte 22 als auch die Trajektorie 33 auf dem Anzeigeelement 16 zu sehen sind (Verfahrensschritt 130). In dem in Figur 5 dargestellten, stark vereinfachten Messszenario hat ein Benutzer des Ortungsgeräts 10 während einer Umpositionierung des Ortungsgeräts 10 zunächst einen Pfad 56 überstrichen, der eine U-Form aufweist, vgl. Figuren 5a und 5c. Die dabei erzeugte Karte 22 stellt ebenfalls die Ortungsdaten in Form einer U-förmigen zumindest zweidimensionalen Karteninformation 20 dar, vgl. zugehörige Figuren 5b und 5d. In Folge der Ausführung des erfindungsgemäßen Verfahrens wird der in Figur 5d dargestellten Karte 22 eine Trajektorie 33 in Form eines auf der Karte 22 dargestellten Linienzugs 33' ausgegeben. Die dargestellte Trajektorie 33 verändert sich im weiteren Verlauf des Ortungsvorgangs entsprechend einer Umpositionierung des Ortungsgeräts 10 (vgl. insbesondere unterschiedliche Form der Trajektorie 33 in Figur 5d und Figur 5f). Ferner erfolgt gleichzeitig eine Ausgabe der Handlungsanweisung mittels Richtungsindikatoren 54, die unter Verwendung der Signalausgabevorrichtung 18', d.h. unter Verwendung der vier LED-Anzeigeelemente des Ortungsgeräts (vgl. Figuren 1 bis 3), dargestellt werden (vgl. Figur 5c und 5e, Kennzeichen 54). Auf diese Weise kann der Verlauf der Trajektorie 33 besonders intuitiv an den Benutzer des Ortungsgeräts 10 ausgegeben werden. Folgt der Benutzer der Trajektorie 33, so wird die zumindest zweidimensionale Karteninformation 20, insbesondere die Karte 22, durch einen optimierten Zugewinn an die Ortung betreffenden Karteninformationen 20 angereichert, insbesondere vervollständigt. Vorteilhaft erfolgt der Zugewinn an die Ortung betreffenden Karteninformationen 20 auf einem optimierten Pfad - der der Trajektorie 33 entspricht -, sodass ein besonders schnell und effizient durchführbarer Ortungsvorgang situationsabhängig realisiert wird. Vorteilhaft sind in dem gezeigten Ausführungsbeispiel bis zur vollständigen Darstellung der Karte 22 keine Abschnitte des Pfads 56 durch Umpositionieren des Ortungsgeräts 10 doppelt überstrichen worden.

Die in dem Kasten (entsprechend Kennzeichen 132 und dem die Wiederholung andeutenden Pfeil) als Ortungsvorgang zusammengefassten Verfahrensschritte, insbesondere Verfahrensschritte 108 bis 130 (exklusiv 120) werden wiederholt durchlaufen, sodass bei sukzessiver Umpositionierung des Ortungsgeräts 10 bezogen auf die Untersuchungsoberfläche 34 eine sich sukzessiv zusammensetzende Karte 22 ausgegeben wird. Es sei angemerkt, dass die Durchführung des erfindungsgemäßen Verfahrens - insbesondere der Verfahrensschritte 104, 118, 120, 122, 124, 128 - ebenfalls wiederholt erfolgen kann, insbesondere Initiiert durch den Benutzer (insbesondere in Verfahrensschritt 128) und/oder bei Erkennen einer Notwendigkeit durch das Ortungsgerät 10 selbst (gestrichelter Pfeil zwischen Verfahrensschritt 114 und Verfahrensschritt 118). Eine solche Notwendigkeit liegt beispielsweise dann vor, wenn eine Aktualisierung der Handlungsanweisung nötig und/oder sinnvoll erscheint. Alternativ liegt eine solche Notwendigkeit beispielsweise dann vor, wenn mittels der in Verfahrensschritt 104 oder 120 gewählten Zielfunktion keine sinnvolle Handlungsanweisung abgeleitet werden kann, sodass eine (erneute) Bestimmung unter Verwendung einer anders definierten Zielfunktion nötig und/oder sinnvoll ist.

Über Eingabe des Benutzers, insbesondere ein Ausschalten des Ortungsgeräts 10, kann der Ortungsvorgang in Verfahrensschritt 126 beendet werden.

In einer bevorzugten Ausführungsform des erfindungsgemäßen Verfahrens ist die Zielfunktion als Summe von Abweichungen von Abstandsgrößen von einer mittleren Abstandsgröße definiert, wobei eine Abstandsgröße für jeden Rasterpunkt zumindest einer Teilmenge aller Rasterpunkte als mittlerer Abstand des Rasterpunkts zu N nächsten Messpositionen Rₙ berechnet wird und die mittlere Abstandsgröße als Mittelwert der Abstandsgrößen berechnet wird.

Eine vereinfachte, schematische Darstellung zur Visualisierung dieser Zusammenhänge ist in Figur 6 gegeben. In Figur 6a ist ein zu untersuchendes Werkstück 40, beispielsweise eine Wand 40', dargestellt. Das Ortungsgerät 10 ist in Folge einer Umpositionierung von einem Startpunkt S aus entlang eines Pfads 56 über die Untersuchungsoberfläche 34 des Werkstücks 40 geführt worden. Dabei sind entlang des Pfads 56 eine Vielzahl an Ortungsmessungen an Messpositionen 44 durchgeführt worden, dargestellt durch kleine "x". Die Menge aller Messpositionen 44 wird repräsentiert durch die Menge der zu den Messpositionen 44 auf der Untersuchungsoberfläche zugeordneten Positionsdaten Rₙ = (Xₙ,Yₙ). Dabei stellen die Positionsdaten zweidimensionale Koordinaten zur Beschreibung einer Messposition 44, insbesondere einer beliebigen Position, bezogen auf die Untersuchungsoberfläche 34 dar. Aus den ermittelten Ortungsdaten (S_{m,n}) an den verschiedenen Messpositionen 44 (Rₙ) wird mittels der Auswertevorrichtung 30 die zumindest zweidimensionale Karteninformation 20 auf einem äquidistanten Raster 70 von Positionskoordinaten (Rasterpunkte 72) berechnet. Das Raster 70 von Positionskoordinaten ist in Figur 6b dargestellt. Aus Gründen der Übersichtlichkeit ist in der Figur 6b die zumindest zweidimensionale Karteninformation 20 ausgelassen - prinzipiell entspräche sie Ortungsdaten, beispielsweise in Form von Messwerten, die jeder Messposition 44 (also allen Messpositionen 44 der Rₙ) zugeordnet sind.

Aus den bereits ermittelten Ortungsdaten (S_{m,n}) an den Messpositionen 44 (Rₙ) sollen bevorzugt weitere Ortungsdaten durch Interpolation (alternativ auch Extrapolation) ermittelt werden, um die zumindest zweidimensionale Karteninformation 20 mit diesen berechneten Ortungsdaten vorteilhaft anreichern zu können. Eine Berechnung von Interpolationswerten ist allerdings nur dann sinnvoll, wenn benachbarte Ortungsdaten nicht zu weit entfernt liegen - genauer gesagt, wenn der Abstand 74 zu benachbarten Messpositionen 44, für die bereits Ortungsdaten durch Ortungsmessungen ermittelt wurden, nicht zu groß ist (dieser Abstand 74 zu benachbarten Ortungsdaten ist in Figur 6b durch kleine Pfeile dargestellt). Daher liegt dem Optimierungsverfahren der Gedanke zu Grunde, weitere "empfohlene" Messpositionen 44' zu ermitteln, die derart ausgewählt sind, dass eine für die Durchführung einer Interpolation vorteilhafte Beabstandung von bereits angefahrenen Messpositionen 44 (der Rₙ) und diesen empfohlenen Messpositionen 44' mit entsprechenden Positionskoordinaten Rₙ' resultiert. Die empfohlenen Messpositionen 44' mit entsprechenden Positionskoordinaten Rₙ' stellen daher solche Messpositionen 44' auf der Untersuchungsoberfläche 34 dar, die für nachfolgende Ortungsmessungen bevorzugt durch Umpositionieren des Ortungsgeräts 10 angefahren werden sollten. Erfolgen weitere Ortungsmessungen an genau diesen empfohlenen Messpositionen 44' mit entsprechenden Positionskoordinaten Rₙ', so können anschließend in Folge einer Interpolation weiterer Ortungsdaten, die insbesondere zwischen dann bereits vorhanden Ortungsdaten mit entsprechenden Positionskoordinaten Rₙ und Rₙ' liegen, ein optimierter Zugewinn an die Ortung betreffenden Karteninformationen 20 erhalten werden. Insbesondere kann mit möglichst wenigen weiteren Ortungsvorgängen an empfohlenen Messpositionen 44' mit entsprechenden Positionskoordinaten Rₙ' ein bevorzugt maximaler Informationsgewinn erzielt werden.

Zur Durchführung der Interpolation wird auf das Raster 70 zurückgegriffen. Insbesondere werden lediglich Rasterpunkte 72 (Kreuzungspunkte des Rasters 70) als mögliche Orte (d.h. Positionen, ebenfalls beschreibbar durch Positionsdaten (x,y)) zur Durchführung einer Interpolation betrachtet, d.h. die Rasterpunkte 72 stellen solche Orte dar, an denen Ortungsdaten mittels einer Interpolation berechnet werden sollen - oder aus technischen Gründen berechnet werden können. Alle zwischen solchen Rasterpunkten 72 liegenden Koordinaten werden für die Durchführung des erfindungsgemäßen Verfahrens nicht betrachtet. Darüber hinaus sollen lediglich für solche Rasterpunkte 72, für die bislang keine Ortungsinformation in Folge einer Ortungsmessung vorliegt und die innerhalb einer konvexen Hülle 76 (schraffierter Bereich) der bereits untersuchten Messpositionen 44 mit entsprechenden Positionsdaten Rₙ liegen, aus bereits gemessenen Ortungsdaten interpolierte Ortungsdaten berechnet werden. Das Optimierungsproblem ergibt sich somit als folgende Fragestellung: durch Hinzunahme von Ortungsdaten welcher empfohlener Messpositionen 44' mit entsprechenden Positionskoordinaten Rₙ', insbesondere Messpositionen 44' vorgegebener und/oder vorgebbarer Anzahl, kann ein optimierter Zugewinn an die Ortung betreffenden Karteninformationen 20 erhalten werden, wenn die Karteninformation 20 zusätzlich zu den an den Messpositionen 44' zu ermittelnden Ortungsdaten auch durch Interpolation unter Verwendung aller dann verfügbaren Ortungsdaten an den Messpositionen 44 und 44', d.h. mit entsprechenden Positionskoordinaten Rₙ bzw. Rₙ', an den Rasterpunkten 72 ergänzt wird.

Die Zielfunktion wird daher als Summe von Abweichungen von Abstandsgrößen von einer mittleren Abstandsgröße definiert, die es im Optimierungsverfahren zu minimieren gilt. Dabei wird eine Abstandsgröße für jeden Rasterpunkt - hier am Beispiel für A, B gezeigt - innerhalb der konvexen Hülle 76 als mittlerer Abstand des Rasterpunkts zu N - hier vier - nächsten Messpositionen 44 mit entsprechenden Positionsdaten Rₙ berechnet. Der mittlere Abstand ist in Figur 6b als Kreis mit Radius r_{A} oder r_{B} repräsentiert. Der Abstand 74 eines Rasterpunkts 72 zu nächsten Messpositionen 44 (Rₙ) wird durch Pfeile angedeutet. Die mittlere Abstandsgröße wird als Mittelwert der Abstandsgrößen berechnet, hier dargestellt als Mittelwert aller Kreisradien rᵢ = r_{A}, r_{B}, ...

In einer alternativen oder zusätzlichen bevorzugten Ausführungsform ist die Zielfunktion als Verteilungsfunktion definiert, wobei der Wert der Verteilungsfunktion an einem Ort mit einer Streuung σ der Ortungsdaten, insbesondere Ortungsdaten, in einer Umgebung Ω des Ortes skaliert und der Skalierungsfaktor von der Anzahl der Ortungsdaten in der Umgebung Ω abhängt.

Eine stark vereinfachte, schematische Darstellung zur Visualisierung der Zusammenhänge ist in Figur 7 gegeben. In Figur 7a ist wieder ein zu untersuchendes Werkstück 40, beispielsweise eine Wand 40', dargestellt, in der ein verborgenes Ortungsobjekt 36 vorhanden ist. Das Ortungsgerät 10 ist in Folge einer Umpositionierung von einem Startpunkt S aus entlang eines Pfads 56 über die Untersuchungsoberfläche 34 des Werkstücks 40 geführt worden. Dabei sind entlang des Pfads 56 eine Vielzahl an Ortungsmessungen an Messpositionen 44 durchgeführt worden (wieder dargestellt durch kleine "x"). Die Menge aller Messpositionen 44 wird repräsentiert durch die Menge der zu den Messpositionen auf der Untersuchungsoberfläche 34 zugeordneten Positionsdaten Rₙ = (xₙ,yₙ). Dabei stellen die Positionsdaten zweidimensionale Koordinaten zur Beschreibung einer Messposition 44, insbesondere einer beliebigen Position, bezogen auf die Untersuchungsoberfläche 34 dar. Aus den ermittelten Ortungsdaten (S_{m,n}) an den verschiedenen Messpositionen 44 mit entsprechenden Positionskoordinaten Rₙ wird mittels der Auswertevorrichtung 30 die zumindest zweidimensionale Karteninformation 20 berechnet. In Figur 7b ist wieder ein Raster 70 von Positionskoordinaten 72 dargestellt, dass an dieser Stelle jedoch nur zur Bezugnahme der Positionsdaten (in Form von Koordinaten) dient. Zur Durchführung des hier beschriebenen Optimierungsverfahrens ist das Raster 70 nicht zwingend notwendig. Aus Gründen der Übersichtlichkeit ist in der Figur 7b die zumindest zweidimensionale Karteninformation 20 wieder weggelassen.

Zusätzlich zu bereits ermittelten Ortungsdaten an den Messpositionen 44 (Rₙ) sollen in diesem Modell weitere Ortungsdaten durch Ortungsmessungen an empfohlenen Messpositionen 44', mit entsprechenden Positionskoordinaten Rₙ', d.h. an mittels des Optimierungsverfahrens berechneten Messpositionen 44', ermittelt werden, um die zumindest zweidimensionale Karteninformation 20 mit diesen Ortungsdaten vorteilhaft anreichern zu können. Aus den bereits vorhandenen Ortungsdaten wird eine Zielfunktion definiert, der der Gedanke zu Grunde liegt, weitere "empfohlene" Messpositionen 44' durch Optimierung zu bestimmen, denen hinsichtlich der zu erstellenden Karteninformation 20 eine besondere Bedeutung zukommt. Als Kriterium für diese besondere Bedeutung wird eine statistische Verteilungsfunktion betrachtet, in der eine räumliche Dichte bereits gemessener Ortungsdaten sowie deren Streuung σ innerhalb einer definierten, vorgebbaren Umgebung Ω einer möglichen Messposition 44' (in Figur 7b beispielhaft repräsentiert durch die Orte A, B) für diese zu berechnende Messposition 44' eingehen. Somit kann ausgehend von dieser Verteilung, beispielsweise einer Gaußverteilung, für die bereits ermittelten Ortungsdaten an den Messpositionen 44 mit entsprechenden Positionskoordinaten Rₙ, beispielsweise definiert als die Anzahl möglichst eindeutig identifizierbarer Folgen von Ortungsdaten in der Umgebung Ω einer möglichen Messposition 44', die Zielfunktion definiert und optimiert werden. Bevorzugt werden derart möglichen Messpositionen 44', die in ihrer definierten Umgebung Ω eine hohe Dichte bereits gemessener Ortungsdaten, besonders bevorzugt hoher Streuung σ, aufweisen, eine hohe Bedeutung zugeordnet. Besonders bevorzugt werden zusätzlich weiteren möglichen Messposition 44" in der Nähe dieser möglichen Messposition 44' eine noch höhere Bedeutung zugeordnet. Die Optimierung, insbesondere Maximierung, dieser Zielfunktion ergibt diejenigen Messpositionen 44' mit entsprechenden Positionskoordinaten Rₙ' vorgegebener und/oder vorgebbarer Anzahl, deren Hinzunahme in einem Ortungsvorgang einen optimierten Zugewinn an die Ortung betreffenden Karteninformationen 20 ergibt.

## Patentansprüche

1. Verfahren zum Betrieb eines bildgebenden Ortungsgeräts (10,10'), bei dem durch Ortung von unter einer Untersuchungsoberfläche (34) verborgenen Ortungsobjekten (36) eine zumindest zweidimensionale Karteninformation (20) erzeugt wird, wobei unter Verwendung einer Auswertevorrichtung (30) des Ortungsgeräts (10,10') aus mittels einer Ortungsvorrichtung (38) des Ortungsgeräts (10,10') ermittelter Ortungsdaten und aus mittels eines Positionssensors (46) des Ortungsgeräts (10,10') ermittelter Positionsdaten eine Handlungsanweisung zum Führen des Ortungsgeräts (10,10') abgeleitet wird, um einen optimierten Zugewinn an die Ortung betreffenden Karteninformationen (20) zu erhalten, **dadurch gekennzeichnet, dass** unter Verwendung der Auswertevorrichtung (30) die Handlungsanweisung als zumindest eine Trajektorie (33) berechnet wird, entlang derer das Ortungsgerät (10,10') zu führen ist, um einen optimierten Zugewinn an die Ortung betreffenden Karteninformationen (20) zu erhalten.

2. Verfahren zum Betrieb eines bildgebenden Ortungsgeräts (10,10') nach Anspruch 1, **dadurch gekennzeichnet, dass** unter Verwendung der Auswertevorrichtung (30) die Trajektorie durch Optimierung einer Zielfunktion berechnet wird.

3. Verfahren zum Betrieb eines bildgebenden Ortungsgeräts (10,10') nach Anspruch 2, **dadurch gekennzeichnet, dass** die Trajektorie durch Optimierung der Zielfunktion unter Berücksichtigung zumindest eines Parameters aus einer Gruppe von Parametern, die zumindest umfasst:
- eine Verteilung der Positionsdaten des Ortungsgeräts (10,10'),
- ein Signal-zu-Rauschverhältnis der Ortungsdaten an unterschiedlichen Positionen des Ortungsgeräts (10,10') bezogen auf die Untersuchungsoberfläche (34),
- eine a-priori Kenntnis über Eigenschaften verwendeter Auswerte- und/oder Interpolationsalgorithmen,
- eine Abweichung in der Korrelation benachbarter Ortungsdaten,
- eine a-priori und/oder während der Ortung erhaltene Kenntnis über Wahrscheinlichkeiten für Abweichungen zwischen einer erwarteten und einer tatsächlichen Position des Ortungsgeräts (10,10') bezogen auf die Untersuchungsoberfläche (34),
berechnet wird.

4. Verfahren zum Betrieb eines bildgebenden Ortungsgeräts (10,10') nach einem der Ansprüche 2-3, **dadurch gekennzeichnet, dass** die Zielfunktion unter Bezugnahme auf Rasterpunkte (72) eines Rasters (70) sowie Messpositionen 44 als Summe von Abweichungen von Abstandsgrößen von einer mittleren Abstandsgröße definiert ist,
- wobei eine Abstandsgröße für jeden Rasterpunkt (72) zumindest einer Teilmenge von Rasterpunkten (72) als mittlerer Abstand des Rasterpunkts (72) zu N nächsten Messpositionen 44 (Rₙ) berechnet wird und
- die mittlere Abstandsgröße als Mittelwert der Abstandsgrößen berechnet wird.

5. Verfahren zum Betrieb eines bildgebenden Ortungsgeräts (10,10') nach einem der Ansprüche 2-4, **dadurch gekennzeichnet, dass** die Zielfunktion als eine Verteilungsfunktion definiert ist, wobei der Wert der Verteilungsfunktion an einem Ort mit einer Streuung der Ortungsdaten in einer Umgebung des Ortes skaliert und der Skalierungsfaktor von einer Anzahl der Ortungsdaten in der Umgebung abhängt.

6. Verfahren zum Betrieb eines bildgebenden Ortungsgeräts (10,10') nach Anspruch 1, **dadurch gekennzeichnet, dass** die zumindest eine Trajektorie (33) in Form eines auf einer Anzeigevorrichtung (18,18') dargestellten Linienzugs (33') ausgegeben wird.

7. Verfahren zum Betrieb eines bildgebenden Ortungsgeräts (10,10') nach einem der Ansprüche 1 und 6, **dadurch gekennzeichnet, dass** die zumindest eine Trajektorie (33) durch Einfärbung und/oder variierende Transparenz einer unter Verwendung einer Anzeigevorrichtung (18,18') als Karte (22)
dargestellten zumindest zweidimensionalen Karteninformation (20) ausgegeben wird.

8. Verfahren zum Betrieb eines bildgebenden Ortungsgeräts (10,10') nach einem der Ansprüche 1, 6 und 7, **dadurch gekennzeichnet, dass** der Verlauf der zumindest einen Trajektorie (33) unter Verwendung von Richtungsindikatoren (54), insbesondere Pfeilen, ausgegeben wird.

9. Bildgebendes Ortungsgerät (10,10'), insbesondere handgehaltenes Ortungsgerät (10'), mit zumindest
- einer Ortungsvorrichtung (38), die dazu vorgesehen ist, Ortungsdaten zu unter einer Untersuchungsoberfläche (34) verborgenen Ortungsobjekten (36) zu erfassen,
- einem Positionssensor (46) zur Erfassung von Positionsdaten des Ortungsgeräts (10,10') bezogen auf die Untersuchungsoberfläche (34),
- einer Auswertevorrichtung (30), die dazu vorgesehen ist, durch Zuordnung von Ortungsdaten zu Positionsdaten eine zumindest zweidimensionale Karteninformation (20) zu bestimmen,
**dadurch gekennzeichnet, dass** die Auswertevorrichtung (30) dazu vorgesehen ist, aus Ortungsdaten und Positionsdaten eine Handlungsanweisung als zumindest eine Trajektorie (33) zu berechnen, entlang derer das Ortungsgerät (10,10') zu führen ist, um einen optimierten Zugewinn an die Ortung betreffenden Karteninformationen (20) zu erhalten.

10. Bildgebendes Ortungsgerät (10,10') nach Anspruch 9, **gekennzeichnet durch** zumindest eine erste Anzeigevorrichtung (18), die dazu vorgesehen ist, zumindest eine Handlungsanweisung, insbesondere die zumindest eine Trajektorie (33), darzustellen.

11. Bildgebendes Ortungsgerät (10,10') nach einem der Ansprüche 9 und 10, **gekennzeichnet durch** zumindest eine zweite Anzeigevorrichtung (18'), die dazu vorgesehen ist, zumindest die zumindest zweidimensionale Karteninformation (20) als Karte (22) darzustellen.

12. Bildgebendes Ortungsgerät (10,10') nach einem der Ansprüche 9 bis 11, **gekennzeichnet durch** zumindest eine Signalausgabevorrichtung (18'), die dazu vorgesehen ist, Richtungsindikatoren (54) optisch, akustisch und/oder taktil auszugeben.

## Claims

1. Method for operating an imaging locating device (10, 10'), in which an at least two-dimensional map information item (20) is generated by locating objects to be located (36) which are concealed under an examination surface (34), wherein an instruction for guiding the locating device (10, 10') is derived using an evaluation apparatus (30) of the locating device (10, 10') from locating data ascertained by means of a locating apparatus (38) of the locating device (10, 10') and from position data ascertained by means of a position sensor (46) of the locating device (10, 10') in order to obtain an optimized gain of map information items (20) relating to the locating process, **characterized in that** the instruction is calculated as at least one trajectory (33) using the evaluation apparatus (30), along which trajectory the locating device (10, 10') should be guided in order to obtain an optimized gain of map information items (20) relating to the locating process.

2. Method for operating an imaging locating device (10, 10') according to Claim 1, **characterized in that** the trajectory is calculated using the evaluation apparatus (30) by optimizing a target function.

3. Method for operating an imaging locating device (10, 10') according to Claim 2, **characterized in that** the trajectory is calculated by optimizing the target function taking account of at least one parameter from a group of parameters, which at least comprises:
- a distribution of the position data of the locating device (10, 10'),
- a signal-to-noise ratio of the locating data at different positions of the locating device (10, 10') in relation to the examination surface (34),
- a priori knowledge about properties of utilized evaluation and/or interpolation algorithms,
- a deviation in the correlation of adjacent locating data,
- a priori knowledge and/or knowledge gained during the locating process about probabilities of deviations between an expected and an actual position of the locating device (10, 10') in relation to the examination surface (34).

4. Method for operating an imaging locating device (10, 10') according to either of Claims 2 and 3, **characterized in that** the target function is defined as a sum of deviations of distance variables from a mean distance variable, with reference being made to grid points (72) of a grid (70) and measurement positions 44,
- wherein a distance variable is calculated for each grid point (72) of at least a subset of grid points (72) as a mean distance of the grid point (72) from N closest measurement positions 44 (Rₙ) and
- the mean distance variable is calculated as the mean value of the distance variables.

5. Method for operating an imaging locating device (10, 10') according to any one of Claims 2 to 4, **characterized in that** the target function is defined as a distribution function, wherein the value of the distribution function at one location scales with a spread of the locating data in surroundings of the location and the scaling factor depends on a number of locating data in the surroundings.

6. Method for operating an imaging locating device (10, 10') according to Claim 1, **characterized in that** the at least one trajectory (33) is output in the form of a polyline (33') that is displayed on a display apparatus (18, 18').

7. Method for operating an imaging locating device (10, 10') according to either of Claims 1 and 6, **characterized in that** the at least one trajectory (33) is output by colouring and/or varying the transparency of an at least two-dimensional map information item (20) that is displayed as a map (22) using a display apparatus (18, 18').

8. Method for operating an imaging locating device (10, 10') according to any one of Claims 1, 6 and 7, **characterized in that** the course of the at least one trajectory (33) is output using directional indicators (54), in particular arrows.

9. Imaging locating device (10, 10'), in particular hand-held locating device (10'), comprising at least
- a locating apparatus (38) which is provided to capture locating data in respect of objects to be located (36) which are concealed under an examination surface (34),
- a position sensor (46) for capturing position data of the locating device (10, 10') in relation to the examination surface (34),
- an evaluation apparatus (30) which is provided to determine an at least two-dimensional map information item (20) by assigning locating data to position data,
**characterized in that** the evaluation apparatus (30) is provided to calculate an instruction as at least one trajectory (33) from locating data and position data, along which trajectory the locating device (10, 10') should be guided in order to obtain an optimized gain of map information items (20) relating to the locating process.

10. Imaging locating device (10, 10') according to Claim 9, **characterized by** at least one first display apparatus (18) which is provided to display at least one instruction, in particular the at least one trajectory (33).

11. Imaging locating device (10, 10') according to either of Claims 9 and 10, **characterized by** at least one second display apparatus (18') which is provided to display at least the at least two-dimensional map information item (20) as a map (22).

12. Imaging locating device (10, 10') according to any one of Claims 9 to 11, **characterized by** at least one signal output apparatus (18') which is provided to output directional indicators (54) in an optical, acoustic and/or tactile manner.

## Revendications

1. Procédé de fonctionnement d'un appareil de localisation par imagerie (10, 10'), dans lequel une information cartographique (20) au moins bidimensionnelle est générée par localisation d'objets de localisation (36) cachés sous une surface d'examen (34), une instruction de guidage de l'appareil de localisation (10, 10') étant dérivée, à l'aide d'un dispositif d'évaluation (30) de l'appareil de localisation (10, 10'), à partir de données de localisation déterminées au moyen d'un dispositif de localisation (38) de l'appareil de localisation (10, 10') et de données de position déterminées au moyen d'un capteur de position (46) de l'appareil de localisation (10, 10') afin d'obtenir un gain optimisé d'informations cartographiques (20) relatives à la localisation, **caractérisé en ce que** l'instruction est calculée à l'aide du dispositif d'évaluation (30) en tant qu'au moins une trajectoire (33) le long de laquelle l'appareil de localisation (10, 10') doit être guidé afin d'obtenir un gain optimisé d'informations cartographiques (20) relatives à la localisation.

2. Procédé de fonctionnement d'un appareil de localisation par imagerie (10, 10') selon la revendication 1, **caractérisé en ce que** la trajectoire est calculée par optimisation d'une fonction cible à l'aide du dispositif d'évaluation (30).

3. Procédé de fonctionnement d'un appareil de localisation par imagerie (10, 10') selon la revendication 2, **caractérisé en ce que** la trajectoire est calculée par optimisation de la fonction cible, avec prise en compte d'au moins un paramètre d'un groupe de paramètres qui comprend au moins :
- une distribution des données de position de l'appareil de localisation (10, 10'),
- un rapport signal sur bruit des données de localisation à différentes positions de l'appareil de localisation (10, 10') par rapport à la surface d'examen (34),
- une connaissance a priori de propriétés d'algorithmes d'évaluation et/ou d'interpolation utilisés,
- un écart dans la corrélation de données de localisation voisines,
- une connaissance a priori et/ou obtenue lors de la localisation sur des probabilités d'écarts entre une position attendue et une position réelle de l'appareil de positionnement (10, 10') par rapport à la surface d'examen (34).

4. Procédé de fonctionnement d'un appareil de localisation par imagerie (10, 10') selon l'une des revendications 2 et 3, **caractérisé en ce que** la fonction cible est définie, par référence à des points de trame (72) d'une trame (70) et à des positions de mesure 44, comme étant la somme d'écarts de grandeurs de distance par rapport à une grandeur de distance moyenne,
- une grande de distance de chaque point de trame (72) d'au moins un sous-ensemble de points de trame (72) étant calculée comme étant la distance moyenne du point de trame (72) aux N positions de mesure suivantes 44 (Rₙ) et
- la grandeur de distance moyenne étant calculée comme étant la valeur moyenne des grandeurs de distance.

5. Procédé de fonctionnement d'un appareil de localisation par imagerie (10, 10') selon l'une des revendications 2 à 4, **caractérisé en ce que** la fonction cible est définie comme étant une fonction de distribution, la valeur de la fonction de distribution étant mise à l'échelle à un lieu avec une dispersion des données de localisation au voisinage du lieu et le facteur de mise à l'échelle dépendant d'un certain nombre de données de localisation au voisinage.

6. Procédé de fonctionnement d'un appareil de localisation par imagerie (10, 10') selon la revendication 1, **caractérisé en ce que** l'au moins une trajectoire (33) est délivrée sous la forme d'une ligne brisée (33') représentée sur un dispositif d'affichage (18, 18').

7. Procédé de fonctionnement d'un appareil de localisation par imagerie (10, 10') selon l'une des revendications 1 et 6, **caractérisé en ce que** l'au moins une trajectoire (33) est délivrée par coloration et/ou variation de transparence d'une information cartographique (20) au moins bidimensionnelle représentée sous la forme d'une carte (22) à l'aide d'un dispositif d'affichage (18, 18').

8. Procédé de fonctionnement d'un appareil de localisation par imagerie (10, 10') selon l'une des revendications 1, 6 et 7, **caractérisé en ce que** le tracé de l'au moins une trajectoire (33) est délivré à l'aide d'indicateurs de direction (54), en particulier de flèches.

9. Appareil de localisation par imagerie (10, 10'), en particulier appareil de localisation portatif (10'), comprenant au moins
- un dispositif de localisation (38) qui est prévu pour acquérir des données de localisation relatives à des objets de localisation (36) cachés sous une surface d'examen (34),
- un capteur de position (46) destiné à acquérir des données de position de l'appareil de localisation (10, 10') par rapport à la surface d'examen (34),
- un dispositif d'évaluation (30) qui est prévu pour déterminer une information cartographique au moins bidimensionnelle (20) en associant des données de localisation à des données de position,
**caractérisé en ce que** le dispositif d'évaluation (30) est prévu pour calculer une instruction, à partir de données de localisation et de données de position, comme étant au moins une trajectoire (33) le long de laquelle l'appareil de localisation (10, 10') doit être guidé afin d'obtenir un gain optimisé d'informations cartographiques concernant la localisation (20).

10. Appareil de localisation par imagerie (10, 10') selon la revendication 9, **caractérisé par** au moins un premier dispositif d'affichage (18) qui est prévu pour représenter au moins une instruction, en particulier l'au moins une trajectoire (33).

11. Appareil de localisation par imagerie (10, 10') selon l'une des revendications 9 et 10, **caractérisé par** au moins un deuxième dispositif d'affichage (18') qui est prévu pour représenter au moins l'information cartographique au moins bidimensionnelle (20) sous forme de carte (22).

12. Appareil de localisation par imagerie (10, 10') selon l'une des revendications 9 à 11, **caractérisé par** au moins un dispositif de sortie de signal (18') qui est prévu pour délivrer des indicateurs de direction (54) par des moyens optiques, acoustiques et/ou tactiles.
